# EUROPÄISCHE PATENTSCHRIFT

(11) **EP 0 863 482 B1**
(45) Veröffentlichungstag und Bekanntmachung des Hinweises auf die Patenterteilung: **29.09.2004**
(21) Anmeldenummer: 98103912.6
(22) Anmeldetag: 05.03.1998
(51) Int. Cl.: G06K 19/08, G06K 13/077, G06K 17/00

(54) **Anlage zur Bearbeitung von Chip- und/oder Magnetstreifenkarten**
Arrangement for processing chip and/or magnetic cards
Installation pour le traitement de cartes à puce et/ou magnétiques

(30) Priorität: 08.03.1997 DE 19709562
(43) Veröffentlichungstag der Anmeldung: 09.09.1998
(73) Patentinhaber: Orga Kartensysteme GmbH, 33104 Paderborn (DE)
(72) Erfinder: Meyer-Wittreck, Udo, 33397 Rietberg (DE); Krupke, Frank, 59494 Soest (DE); Rübbelke, Hermann, 33129 Delbrück (DE); Röbke, Steffen, 33098 Paderborn (DE)

(56) Entgegenhaltungen:
- DE-A- 3 049 607
- US-A- 4 825 054
- US-A- 4 827 425

## Beschreibung

Die Erfindung bezieht sich auf eine Anlage zur Bearbeitung von Chip- und/oder Magnetstreifenkarten- eine sogennante Kartenpersonalisierungsanlage. Mit einer derartigen Anlage werden einerseits karten-/benutzerspezifische Daten auf den Chip (Halbleiterbaustein) und/oder den Magnetstreifen aufgezeichnet und andererseits karten-/benutzerspezifische Daten auf den Kartenkörper aufgebracht. Hierzu weist eine solche Anlage eine Chip- und/oder Magnetstreifen-Bearbeitungsstation, in der die Chip und ggf. die Magnetstreifen-Bearbeitung in bekannter Weise integriert ist, und eine Kartenkörper-Bearbeitungsstation auf. Während die auf den Chip bzw. den Magnetstreifen aufgezeichneten Daten in der Regel änderbar sind, da die entsprechenden Speichermedien mehrfach beschreibbar sind, sind die auf den Kartenkörper aufgebrachten Daten nicht änderbar. Die nicht änderbaren Daten werden beispielsweise durch Laserbeschriftung, Thermotransferdruck oder durch Prägen (Embossing) auf den Kartenkörper aufgebracht. Das Format dieser Karten ist durch internationale Normen standardisiert (siehe ISO 7810).

Eine derartige Anlage ist zum Beispiel aus der DE 30 49 607 bekannt. Bei dieser Anlage durchlaufen die Karten, welche aus einem die zu bearbeitenden Karten enthaltenden Kartenvorratsmagazin entnommen werden, nacheinander erst die Chip- und/oder Magnetstreifen-Bearbeitungsstation, wo die änderbaren Daten aufgezeichnet werden, und dann die Kartenkörper-Bearbeitungsstation, wo die nicht änderbaren Daten aufgebracht werden. Dabei wird nach dem Aufzeichnen der Daten auf den Chip- und/oder Magnetstreifen überprüft, ob die Aufzeichnung ordnungsgemäß erfolgt ist. Dies kann in der Chip- und/oder Magnetstreifen-Bearbeitungsstation oder in einer separaten Kontrollstation erfolgen. Karten, bei denen die Datenaufzeichnung auf den Chip- und/oder Magnetstreifen nicht ordnungsgemäß erfolgte, werden der Kartenkörper-Bearbeitungsstation, wo die nicht änderbaren Daten aufgezeichnet werden, nicht mehr zugeführt. Diese Karten werden ausgesondert. Ein Problem bei einer derartigen Anlage ist allerdings der Kartendurchsatz, da die Bearbeitungszeiten in der Chip- und/oder Magnetstreifen-Bearbeitungsstation und der Kartenkörper-Bearbeitunsstation wesentlich voneinander verschieden sind. Ein typisches Beispiel: Bearbeitungszeit für Aufzeichnung der Daten auf einen Mikroprozessorchip ca. 20sec; Bearbeitungszeit für das Aufbringen von alphanumerischen Zelchen durch. Laserbeschriftung auf den Kartenkörper ca. 6 sec. Die langsame "Chip-Personalisierung" begrenzt hier den Kartendurchsatz. Die Merkmale des Oberbegriffs von Anspruch 1 sind aus diesem Dokument bekannt.

Eine weitere Anlage ist aus der EP 0 256 921 bekannt. Allerdings gestattet diese Anlage nur das Aufzeichnen von Daten auf den Chip- und/oder Magnetstreifen und nicht das Aufbringen von nicht änderbaren Daten auf den Kartenkörper. Diese Anlage umfasst somit nur einen Typ von Bearbeitungsstation, wenn man die Chip-und Magnetstreifen-Bearbeitung als in einer Bearbeitungsstation integriert betrachtet. Da die Aufzeichnung der Daten in einer Chip-und/oder Magnetstreifen-Bearbeitungsstation sehr viel länger dauert als die Zeit für die Entnahme einer Karte aus dem Kartenvorratsmagazin, den Transport dieser Karte zur Chip- und/oder Magnetstreifen-Bearbeitungsstation und die Übergabe dieser Karte an dieselbe, wird in dieser Anlage die Chip-und/oder Magnetstreifen-Bearbeitungsstation mehrfach ausgeführt, d.h. während die zuerst transportierte Karte sich zur Datenaufzeichnung in einer Chip-und/oder Magnetstreifen-Bearbeitungsstation befindet, werden bereits die nächsten Chip-und/oder Magnetstreifen-Bearbeitungsstationen aufgefüllt usw. Zu diesem Zweck weist die Anlage mehrere nebeneinander angeordnete Chip-und/oder Magnetstreifen-Bearbeitungsstationen auf. Ein linear vor diesen Stationen verfahrbarer Greifer entnimmt die zu bearbeitenden Karten aus dem Kartenvorratsmagazin, transportiert sie zu den Chip- und/oder Magnetstreifen-Bearbeitungsstationen und steckt sie in diese hinein, wobei die Chip- und/oder Magnetstreifen-Bearbeitungsstationen sukzessive aufgefüllt werden. Ist eine Karte fertig, so zieht der Greifer diese Karte aus der Chip-und/oder Magnetstreifen-Bearbeitungsstation heraus und transportiert sie zu einem Ablagemagazin. Für das Aufbringen von nicht änderbaren Daten auf den Kartenkörper, z.B. mittels Laserbeschriftung, müßten die Karten aus dem Ablagemagazin entnommen und einer anderen Anlage zugeführt werden.

Desweiteren ist eine von der Anmelderin selbst entwickelte Anlage bekannt (siehe beiliegenden Prospekt- HPS4000), die sowohl eine Chip-und/oder Magnetstreifen-Bearbeitungsstation als auch eine Kartenkörper-Bearbeitungsstation in Form einer Laserbeschriftungsstation umfasst. Die Chip-und/oder Magnetstreifen-Bearbeitungsstation ist dabei 4-fach vorhanden, während die Laserstation nur einfach vorhanden ist. Damit wird der Tatsache Rechnung getragen, daß das Aufzeichnen der Daten auf den Chip-und/oder Magnetstreifen wesentlich länger dauert als die Laserbeschritung der Kartenkörper. In dieser Anlage werden die zu bearbeitenden Karten über einen Roboterarm mit einem Saugnapf aus dem Kartenvorratsmagazin entnommen, anschließend über den Roborterarm zu einer Chip- und/oder Magnetstreifen-Bearbeitungsstation transportiert und an die Bearbeitungsstation übergeben. Nach dem Aufzeichnen der Daten auf den Chip-und/oder Magnetstreifen werden die Karten von dem Roboterarm wieder aus der Chip-und/oder Magnetstreifen-Bearbeitungsstation entnommen und dann der Laserstation zugeführt. Nach erfolgter Laserbeschriftung einer Karte wird diese wieder vom Roboterarm aus der Laserstation entnommen und in ein Ablagemagazin gelegt. Im Vergleich zur Anlage gemäß der oben genannten EP 0 256 921 umfasst diese Anlage zwar die Mehrfachausführung der langsamen Chip-und/oder Magnetstreifen-Bearbeitungsstation und eine Kartenkörper-Bearbeitungsstation zum Aufbringen von nicht änderbaren Daten auf den Kartenkörper, allerdings ist auch mit dieser Anlage eine Steigerung des Kartendurchsatzes, die durch die immer größer werdende Kartennachfrage notwendig ist, aufgrund ihres konstruktiven Aufbaus nicht erreichbar. Der sich dreidimensional durch den Raum bewegende Roboterarm benötigt sehr viel Platz, wodurch die Kartentransportwege/-zeiten entsprechend lang sind. Darüber hinaus ist die Ansteuerung eines solchen Roboterarms relativ komplex und auch zeitaufwendig. Damit sind einem Ausbau der Parallelverarbeitung durch Hinzunahme mehrerer Chip-und/oder Magnetstreifen-Bearbeitungsstationen Grenzen gesetzt, da dieses System in der vorgegebenen Bearbeitungszeit nicht weitere Stationen mit Karten beschicken könnte. Auch für den Fall, daß die Bearbeitungszeit der im Vgl. zur Laserbeschriftung langsamen Chip-und/oder Magnetstreifen-Bearbeitung zum Bsp. durch schnellere Aufzeichnungsverfahren oder durch Reduzierung der aufzuzeichnenden Datenmenge verkürzt wird, stößt diese Anlage an ihre Grenzen.

Aufgabe der Erfindung ist es daher, eine Anlage zur Bearbeitung von Chip-und/oder Magnetstreifenkarten zu konstruieren, die gegenüber den oben beschriebenen Anlagen einen erhöhten Kartendurchsatz ermöglicht.

Diese Aufgabe wird durch die kennzeichnenden Merkmale des Patentanspruches 1 gelöst. Die sich daran anschließenden Unteransprüche enthalten vorteilhafte Ausgestaltungen der Erfindung.

Auf den beigefügten Zeichnungen wird die Erfindung nachfolgend näher beschrieben und die Vorteile erläutert. Es zeigt:
- Fig. 1: eine perspektivische Ansicht der Anlage,

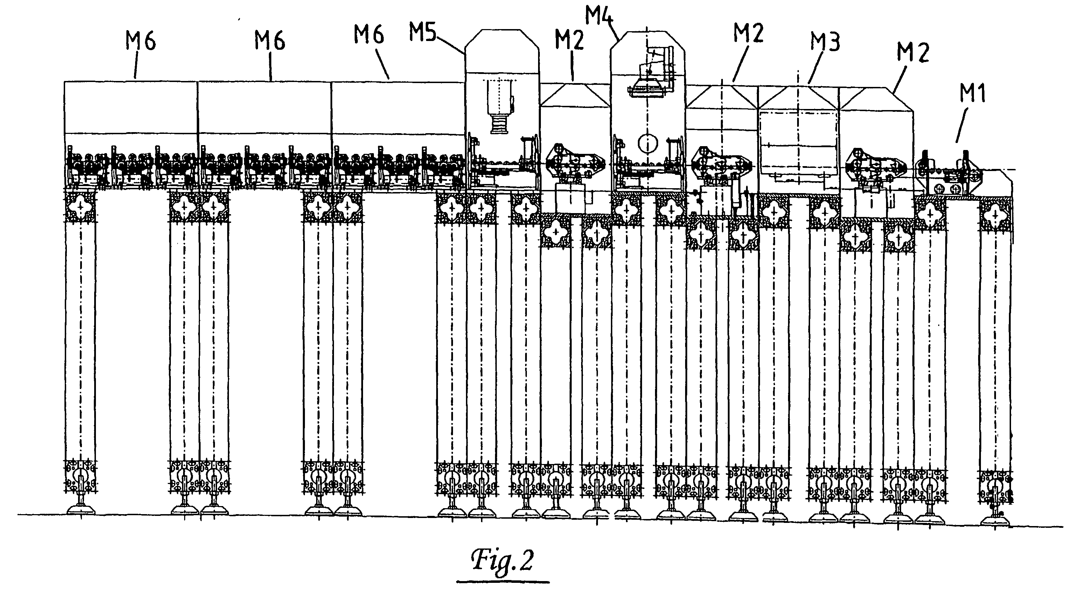

- Fig.2: eine Seitenansicht der Anlage,
- Fig.3: eine Draufsicht auf die Anlage,

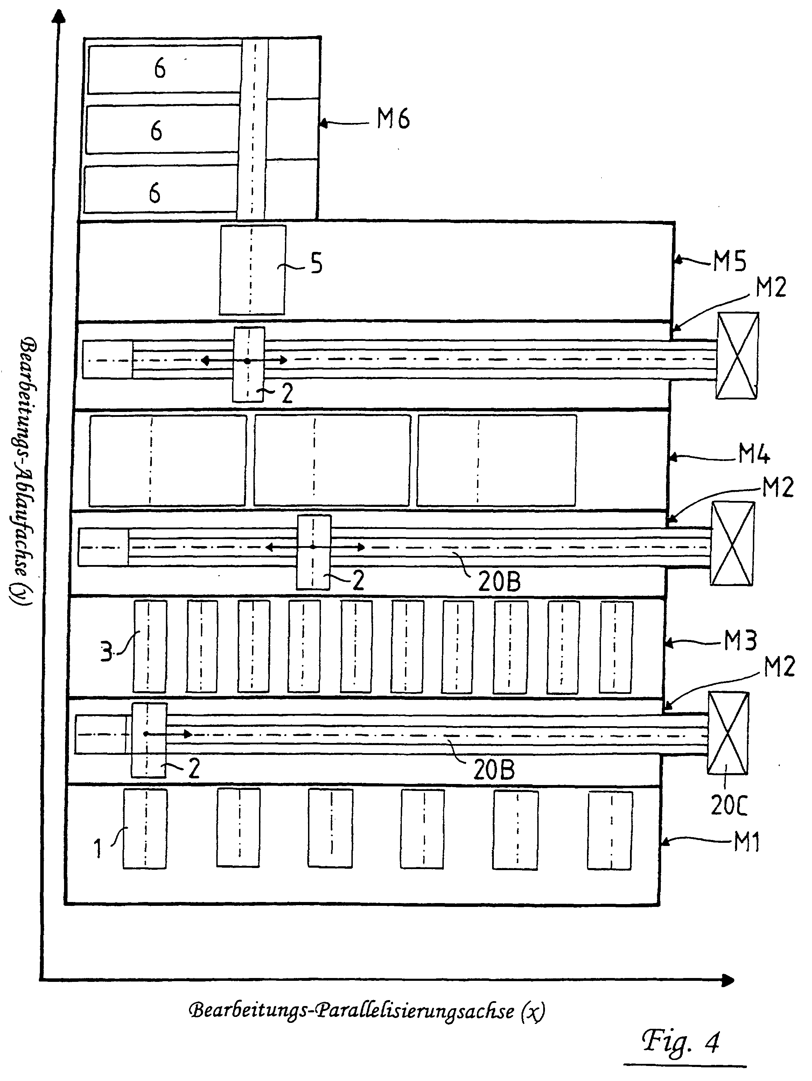

- Fig.4: eine schematische Ansicht der Anlagenkomponenten in der Draufsicht,

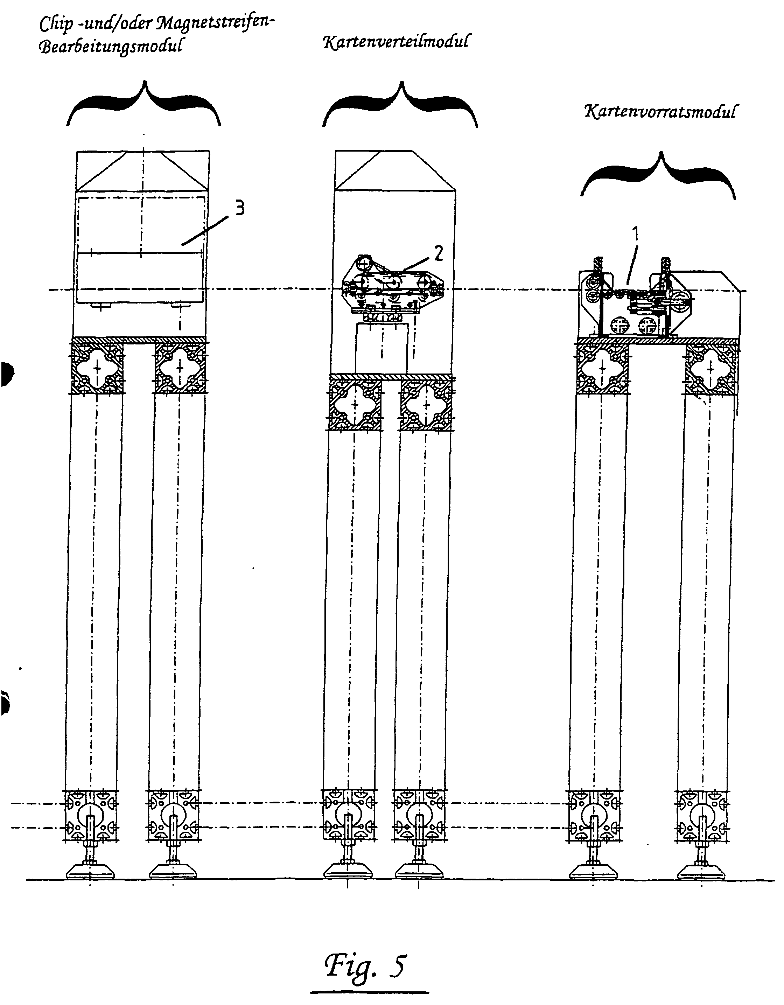

- Fig.5: eine Seitenansicht von Teilen der modular aufgebauten Anlage vor dem Zusammenbau (von rechts nach links: Kartenvorratsmodul, Kartenverteilmodul, Chip-und/oder Magnetstreifen-Bearbeitungsmodul),

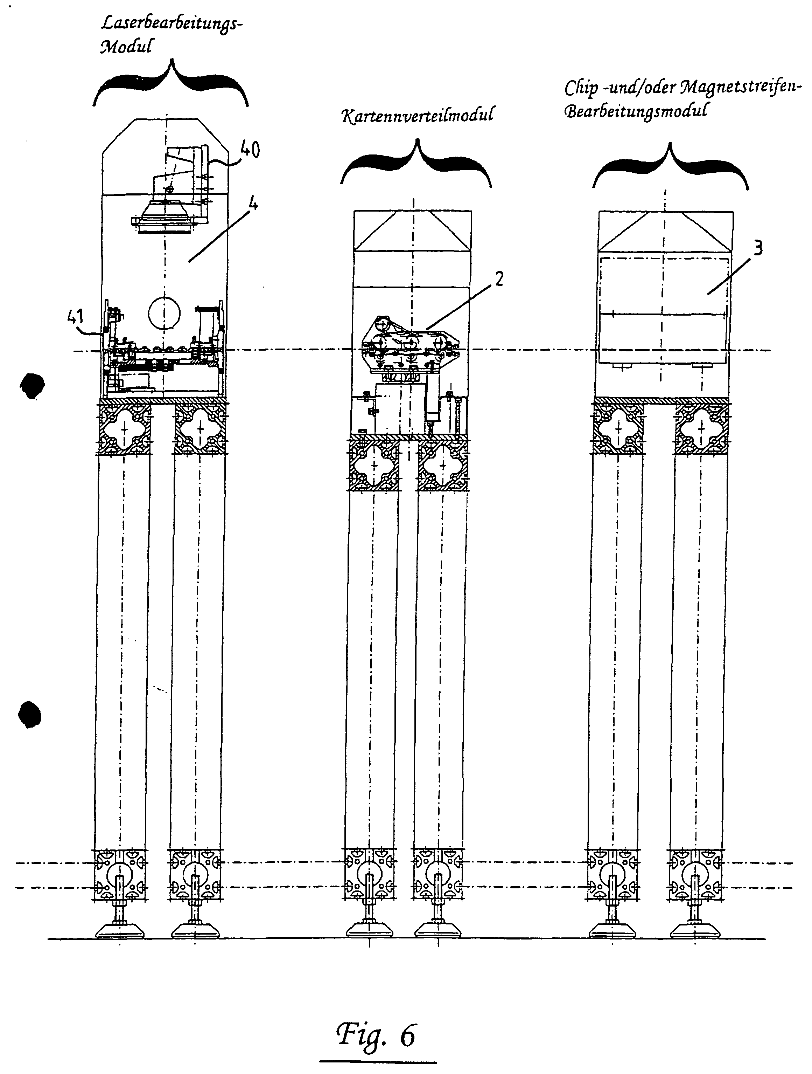

- Fig.6: eine Seitenansicht von Teilen der modular aufgebauten Anlage vor dem Zusammenbau (von rechts nach links: Chip-und/oder Magnetstreifen-Bearbeitungsmodul, Kartenverteilmodul, Kartenkörper-Bearbeitungsmodul- hier Laserstationsmodul),

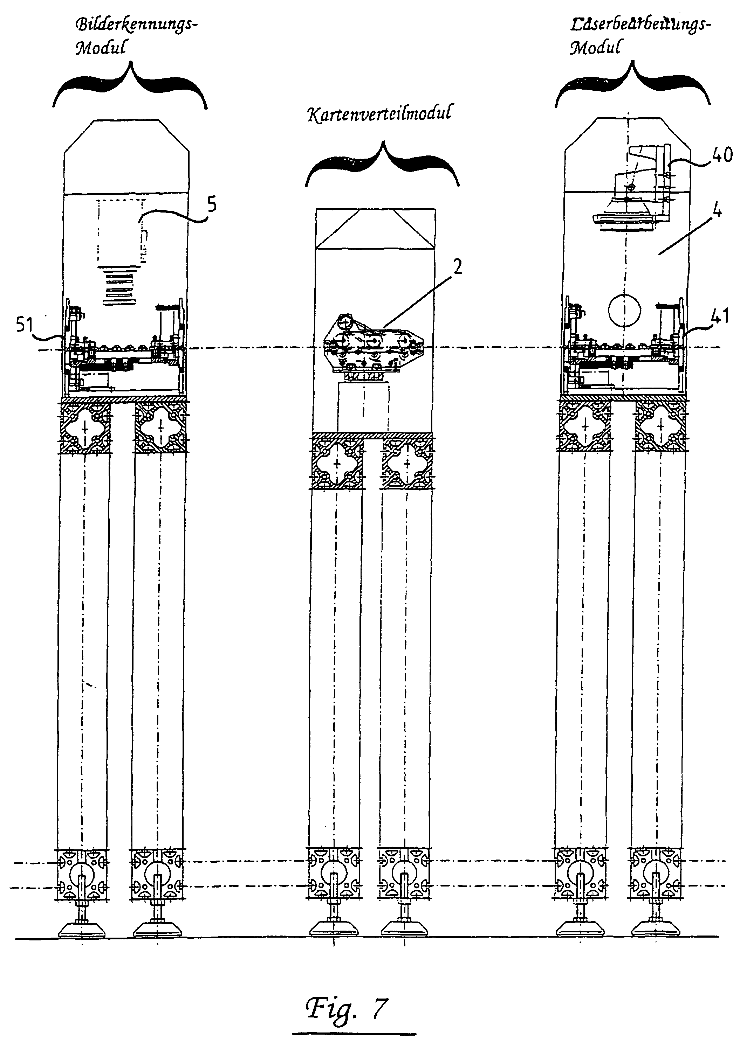

- Fig.7: eine Seitenansicht von Teilen der modular aufgebauten Anlage vor dem Zusammenbau (von rechts nach links: Kartenkörper-Bearbeitungsmodul, Kartenverteilmodul, Bilderkennungsmodul),

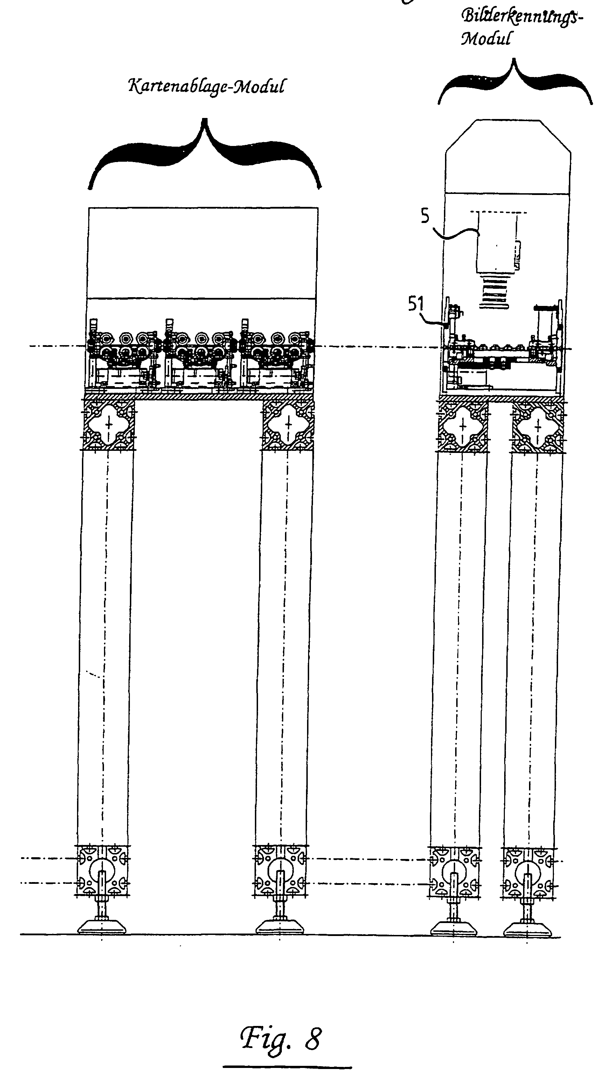

- Fig.8: eine Seitenansicht von Teilen der modular aufgebauten Anlage vor dem Zusammenbau (von rechts nach links: Bilderkennungsmodul, Kartenablagemodul mit drei Ablagemagazinen),
- Fig.9: eine schematische Darstellung der Vereinzelung einer Karte aus dem Kartenvorratsmagazin,
- Fig.10: eine schematische Darstellung der Kartenübergabe von einem Kartenvorratsmagazin zur Kartenverteilvorrichtung,
- Fig.11: eine Seitenansicht der zum Kartenvorratsmagazin gehörenden Kartenvereinzelungsvorrichtung,
- Fig.12: eine Seitenansicht der Kartenverteilvorrichtung,
- Fig.13: eine Ansicht in Bearbeitunsablaufrichtung der auf auf einem Zahnriemen montierten Kartenverteilvorrichtung,
- Fig.14: eine schematische Seitenansicht der Kartenübergabe von einer Kartenverteilvorrichtung an eine Bearbeitungstation,
- Fig. 15: eine schematische Seitenansicht der Laserbeschriftungsstation,
- Fig.16: eine Draufsicht der zur Laserbeschrfitungsstation gehörenden Kartentransport- und Positioniervorrichtung,
- Fig.17: eine Seitenansicht der zur Laserbeschriftungsstation gehörenden Kartentransport- und Positioniervorrichtung zur Verdeutlichung der Kartenwendeoption,
- Fig.18: eine schematische Ansicht der Bilderkennungsstation.

Die Anlage weist erfindungsgemäß eine Kartentransportebene (x,y) mit einer Bearbeitungs-Ablaufachse (y) und einer Bearbeitungs-Parallelisierungs-Achse (x) auf. Dabei sind Bearbeitunsstationen (3,4) unterschiedlichen Bearbeitungstyps beabstandet hintereinander entlang der Bearbeitungsablaufachse (y) angeordnet und mehrfach ausgeführte Bearbeitungsstationen (3,4) eines Bearbeitungstyps parallel nebeneinander jeweils entlang der Bearbeitungs-Parallelisierungsachse (x) als Bearbeitungsmodul (M3,M4) angeordnet. In Bearbeitungsrichtung vor und hinter einem Bearbeitungsmodul (M3,M4) bestehend aus zwei oder mehreren Bearbeitungsstationen (3,4) desselben Bearbeitungstyps ist jeweils mindestens eine zum Kartentransportsystem gehörende Kartenverteilvorrichtung (2) angeordnet ist, die entlang der Bearbeitungs-Parallelisierungsachse (x) verfahrbar ist, und in der Lage ist, nach dem Anfahren jeweils einer Kartenempfangs- bzw. Kartenausgabeposition eine Karte (K) von einem Kartenvorratsmagazin (1) oder einer Bearbeitungsstation (3,4) zu empfangen, aufzunehmen bzw. an eine Bearbeitungsstation (3,4) auszugeben.

Die so angeordneten Stationen/Komponenten der Anlage können auf einer einzigen, durchgehenden Montageplatte aufgebaut sein; oder vorzugsweise - wie in dem Ausführungsbeispiel - wiederum Teile von separaten Anlagemodulen sein, wobei diese Anlagemodule trennbar und auswechselbar miteinander verbunden sind.

Diese Anlage ermöglicht daher die Integration von Bearbeitungsstationen (3,4) unterschiedlichen Bearbeitungstyps, insbesondere mit unterschiedlichen Bearbeitungszeiten, und die Parallelisierung von Bearbeitungsvorgängen bei kurzen Kartentransportwegen. Der nur zweidimensionale Kartentransport entlang der orthogonal zueinander angeordneten Bearbeitungs-Ablaufachse (y) und der Bearbeitungs-Parallelisierungsachse (x) ermöglicht diese kurzen und schnellen Kartentransportwege. Der Zeitaufwand für das Anfahren der Kartenverteilvorrichtung (2) an Kartenempfangs-bzw. Kartenausgabepositionen sowie der Zeitaufwand für den Kartenempfang und die Kartenausgabe selbst sind gegenüber der oben beschriebenen Anlage mit einem sich dreidimensional bewegenden Roboterarm zum Kartentransport deutlich geringer. Auch der Steuerungsaufwand ist geringer. Nach der Bearbeitung einer Karte innerhalb einer Bearbeitungsstation verläßt diese Karte die Bearbeitungsstation in Bearbeitungsablaufrichtung zur nächsten Bearbeitungsstation. Bei der Anlage gemäß EP 0 256 921 und auch bei oben beschriebenen Anlage mit dem Roboterarm zum "Kartenhandling" wird eine Karte jeweils in eine Bearbeitungsstation eingeführt und nach der Bearbeitung entgegen der Einführrichtung wieder herausgenommen, was einen doppelten Kartentransportweg innerhalb der Bearbeitungsstation bedeutet. Im Unterschied hierzu verläßt bei der erfindungsgemäßen Anlage die Karte nach der Bearbeitung die Bearbeitungsstation in Bearbeitungsablaufrichtung (y) zur nächsten Bearbeitungsstation.

Das auf den Zeichnungen dargestellte Ausführungsbeispiel der erfindungsgemäßen Anlage umfasst 10 Chip- und/oder Magnetstreifen-Bearbeitungsstationen (3), 3 Laserstationen (4) als Kartenkörper-Bearbeitungsstationen zum Aufbringen der nicht änderbaren Daten auf den Kartenkörper sowie 6 Kartenvorratsmagazine (1) mit integrierter Vorrichtung (10) zur Vereinzelung der magazinierten Karten (K). Jede Chip-und/oder Magnetstreifen-Bearbeitungsstation (3) ist in bekannter Weise dazu in der Lage, die Richtigkeit der aufgezeichneten Daten zu überprüfen. In Bearbeitungsablaufrichtung hinter den Laserstationen (4) ist zusätzlich eine Bilderkennungsstation (5) zur Überprüfung der Richtigkeit und Qualität der auf den Kartenkörper aufgebrachten Daten/Informationen angeordnet. Nach erfolgter Bildauswertung wird automatisch entschieden, ob eine Karte (K) in ein Ablagemagazin (6) für korrekt bearbeitete Karten oder in ein Ausschußmagazin (6) für fehlerhafte Karten transportiert wird.

Die 6 Kartenvorratsmagazine (1) mit jeweils ihren Vereinzelungsvorrichtungen (10) sind nebeneinander entlang der Bearbeitungs-Parallelisierungsachse (x) angeordnet. Ein Vorratsmagazin (1) kann je nach Ausführung bis zu 400 Karten aufnehmen. Der Magazinschacht ist bei größeren Magazinen vorzugsweise zumindest auf einem Teilbereich gegenüber der Vertikalen schräg oder gekrümmt verlaufend ausgebildet, so daß ein Teil der Gewichtskraft der übereinanderliegenden Karten von dem Magazinschacht aufgefangen wird und somit die jeweils zu vereinzelende, unterste Karte (K) gewichtsmäßig entlastet wird.

Durch die Anordnung von mehreren Kartenvorratsmagazine (1)/ Vereinzelungsvorrichtungen (10) entlang der Bearbeitungs-Parallelisierungsachse (x), auf die die zu bearbeitenden Karten einer Sorte verteilt werden, lassen sich die Kartentransportwege/zeiten für die sich in Bearbeitungsablaufrichtung (y) hinter den Kartenvorratsmagazinen (1) befindliche Kartenverteilvorrichtung (2) zur Beschickung der Chip- und/oder Magnetstreifen-Bearbeitungsstationen (3) minimieren. Zur Steuerung des Verfahrweges der Kartenverteilvorrichtung (2) zu den jeweiligen Kartenempfangs- und Ausgabepositionen enthält die computergestützte Anlagensteuerung einen entsprechenden Steueralgorithmus, der die verschiedenen Wegstrecken von den einzelnen Kartenvorratsmagazine (1) zu den verschiedenen Chip-und/oder Magnetstreifen-Bearbeitungsstationen (3) berücksichtigt. Beim Starten der Kartenbearbeitung werden die Chip-und/oder Magnetstreifen-Bearbeitungsstationen (3) nacheinander mit Karten (K) aufgefüllt. Meldet eine Chip-und/oder Magnetstreifen-Bearbeitungsstation (3), das sie mit der Bearbeitung einer Karte fertig ist und bereit ist, die nächste Karte zu empfangen, so entscheidet der Steueralgorithmus unter Berücksichtigung der momentanen Position der Kartenverteilvorrichtung (2) darüber, aus welchem Kartenvorratsmagazin (1) eine Karte für die freigewordene Chip-und/oder Magnetstreifen-Bearbeitungsstation (3) zu entnehmen ist.

Darüber hinaus ist es auch möglich, daß in den Kartenvorratsmagazinen (1) jeweils verschiedene Kartensorten (z.B im 1. Magazin Bankarten der Bank A, im 2. Magazin Bankkarten der Bank B usw.) magaziniert sind. In diesem Fall werden die Karten solange immer aus einem Kartenvorratsmagazin (1) entnommen und auf die verschiedenen Chip- und/oder Magnetstreifen-Bearbeitungsstationen (3) verteilt bis der zu dieser Kartensorte gehörende Auftrag abgearbeitet ist.

Die Verwendung von 6 Kartenvorratsmagazinen (1) ist nur speziell in diesem AusKhnmgsbeispiel so. Es sind auch erfindungsgemäße Anlagen mit einer anderen Anzahl von Kartenvorratsmagazinen oder auch nur mit einem einzigen Kartenvorratsmagazin vorgesehen, von dem dann die verschiedenen Chip-und/oder Magnetstreifen-Bearbeitungsstationen (3) über die Kartenverteilvorrichtung (2) mit Karten versorgt werden.

Die Kartenvorratsmagazine (1) mit ihren Vereinzelungsvorrichtungen (10) bilden konstruktiv ein Kartenvorratsmodul (M1), das trennbarbar mit der Anlage verbunden ist. Die Kartenvorratsmagazine (1) mit ihren integrierten Vereinzelungsvorrichtungen (10) sind wiederum abnehmbar und austauschbar auf dem Kartenvorratsmodul (1) angeordnet. Dieses Kartenvorratsmodul (M1) wird als Komponente der Anlage mit dieser verbunden, indem das Kartenvorratsmodul (M1) an das erste Kartenverteilmodul (M2) - siehe weiter unten - "angedockt" wird.

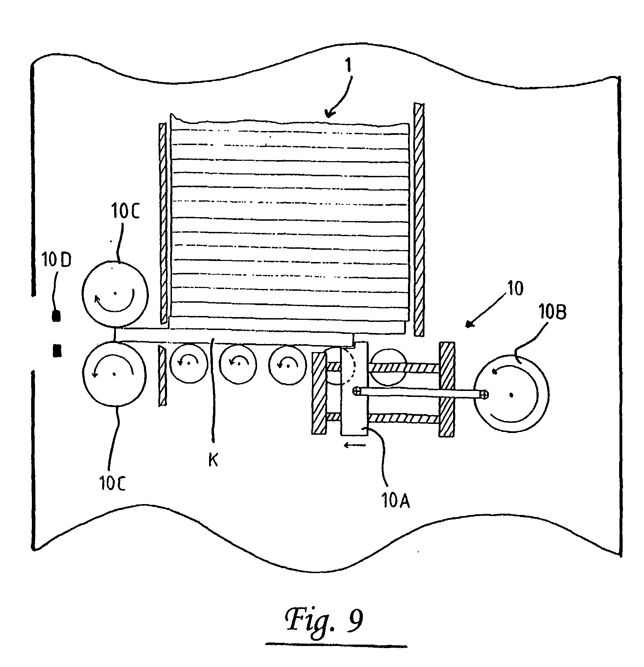

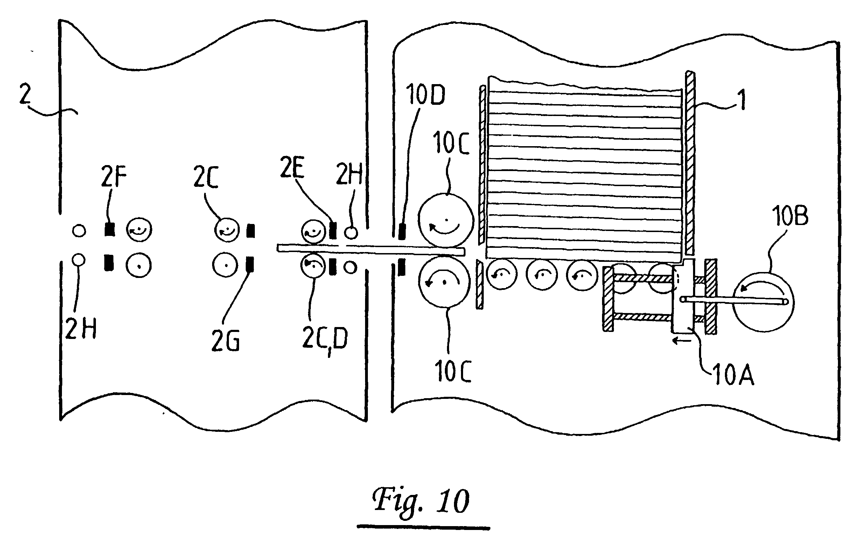

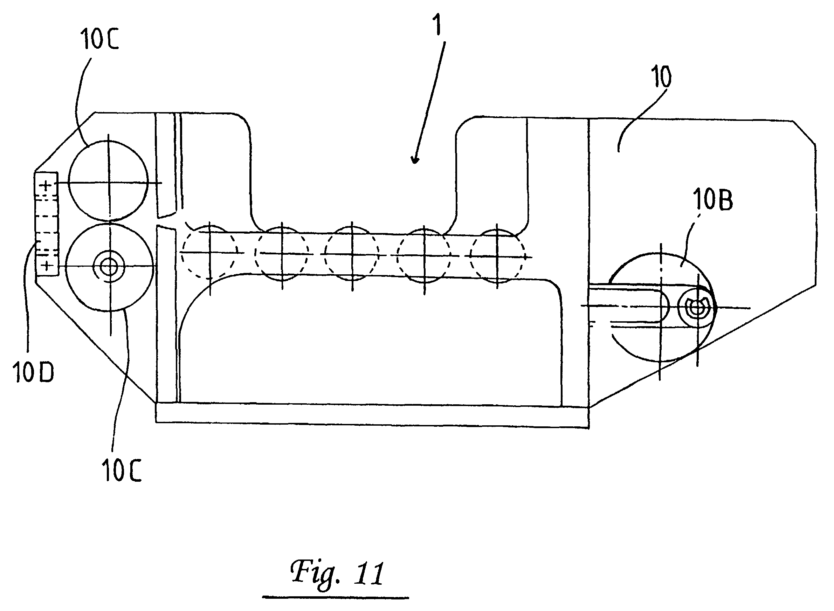

Die Vereinzelung einer Karte (K) aus dem Magazin (1) erfolgt durch die Vereinzelungsvorrichtung (10) - Vgl. Fig.11 -, auf der das Kartenvorratsmagagzin (1) mit seinem Magazinschacht aufgesetzt ist. Dabei wird die zu vereinzelende Karte (K) mittels eines von einem Kurbeltrieb (10B) angetriebenen Schiebers (10A) an motorisch angetriebene Auszugsrollen (10C) übergeben, die die Karte dann unter dem Kartenstapel herausziehen. Dies ist schematisch in Fig. 9 dargestellt. Die Übergabe der vereinzelten Karte (K) an eine sich in Kartenempfangsposition befindende Kartenverteilvorrichtung (2) ist in Fig.10 schematisch dargestellt. Nachdem die vereinzelte Karte (K) die Lichtschranke (10D) in der zum Kartenvorratsmagazin (1) gehörenden Vereinzelungsvorrichtung (10) passiert hat, wird der Antrieb der Auszugsrollen (10C) ausgeschaltet.

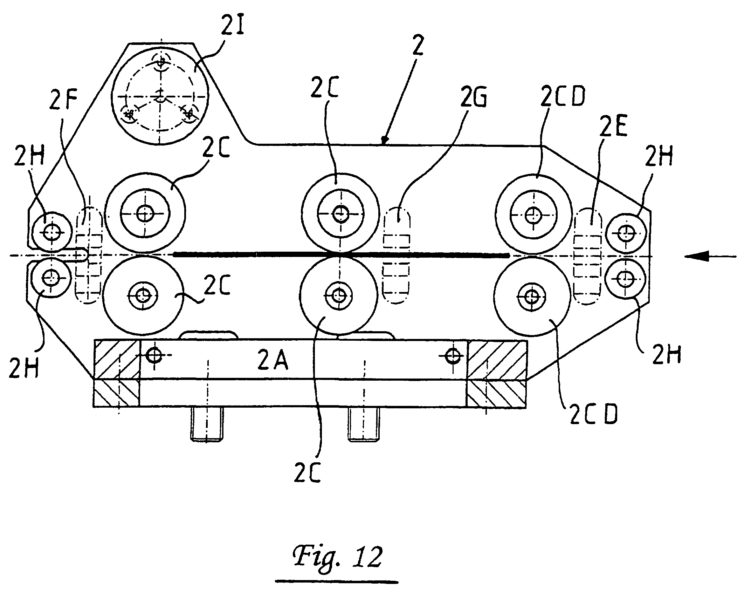

Die Kartenverteilvorrichtung (2) - vgl. Fig.12- weist einen entlang der Bearbeitungs-Parallelisierungsachse (x) motorisch verfahrbaren Schlitten (2A) auf, auf dem ein Kartenaufnahme-Gehäuse (2B) monitiert ist, wobei hier Gehäuse nicht ein geschlossenes Gehäuse bedeuten muß, sondern wie in diesem Ausführungsbeispiel von zwei Gehäuseseitenteilen gebildet ist. In dem Kartenaufnahme-Gehäuse (2B) sind 3 motorisch antreibbare Transportrollen-Paare, welche jeweils aus zwei übereinander angeordneten, zwischen sich jeweils die Karten im Reibkontakt in Höhe der Kartentransport-Ebene (x,y) aufnehmenden Transportrollen (2C) bestehen. Diese Transportrollen (2C) sind auf senkrecht zur Bearbeitungs-Ablaufachse (y) angeordneten Achsen drehbar gelagert. Dabei ist jeweils eine Transportrolle (2C) eines Transportrollen-Paares motorisch antreibbar. Vorzugsweise ist die Antriebsrichtung der Transportrollen (2C) umkehrbar, so daß die Kartenverteilvorrichtung (2) in der Lage ist, in beide Richtungen Karten zu empfangen oder auszugeben. Bei der Kartenübergabe von der Vereinzelungsvorrichtung/Kartenvorratsmagazin(10,1) an die Kartenverteilvorrichtung (2) werden die Karten jeweils von den Auszugsrollen (10C) der Vereinzelungsvorrichtung (10) an die Einzugrollen (2D) der Kartenverteilvorrichtung (2) zum Weitertransport übergeben. In der Kartenempfangsposition rollen die Karten quasi angestoßen durch den Schieber (10A) der Vereinzelungsvorrichtung (10) durch bis in die Kartenverteilvorrichtung (2). Dies geht im Vgl. zu dem in der EP 0 252 921 beschriebenen Greifer wesentlich schneller und schonender für die empfindliche Kartenoberfläche. In dem Kartenaufnahme-Gehäuse (2B) der Kartenverteilvorrichtung (2) ist mindestens ein Sensor vorgesehen, der meldet, ob eine eingezogene Karte (K) ordnungsgemäß aufgenommen bzw. ausgegeben wurde. Erst nach einer ordnungsgemäßen Sensormeldung kann die Kartenverteilvorrichtung (2) entlang der Bearbeitungs-Parallelisierungsachse (x) verfahren werden. Damit ist sichergestellt, daß die Kartenverteilvorrichtung (2) nicht verfahren wird, wenn die Karte z.B. noch teilweise in der Vereinzelungsvorrichtung (10) und erst teilweise in der Kartenverteilvorrichtung (2) steckt. In dem dargestellten Ausführungsbeispiel sind für die Kartenverteilvorrichtung (2) drei Lichtschranken (2E,2F,2G) als Sensoren vorgesehen, deren Funktion erläutert werden soll: Die karteneingangsseitig vor den Transportrollen (2D) angeordnete Lichtschranke (2E) startet unmittelbar nach Detektion einer an die Kartenverteilvorrichtung (2) übergebenen Karte (K) den Antrieb (2I) für die Transportrollen (2C) für den weiteren Einzug und Transport der Karte (K). Nachdem die Karte (K) die Lichtschranke (2E) durchlaufen hat, wird eine Meldung erzeugt, die das Verfahren der Kartenverteilvorrichtung (2) entlang der Bearbeituns-Parallelisierungsachse (x) freischaltet. Die kartenausgangsseitige Lichtschranke (2F) erzeugt eine Meldung, wenn die Karte die Lichtschranke (2F) durchlaufen hat, damit wird wiederum das Verfahren der Kartenverteilvorrichtung (2) freigeschaltet. Außerdem schaltet die kartenausgabeseitige Lichtschranke (2F) unmittelbar nach Detektion einer empfangenen Karte den Antrieb (2I) für die Transportrollen (2C) aus, wenn die Kartenverteilvorrichtung (2) noch nicht die vorgesehene Ausgabeposition erreicht hat. Die mittlere Lichtschranke (2G) erzeugt eine Meldung, wenn sich eine Karte zwischen den beiden äußeren Lichtschranken (2E,2F) befindet. Dies ist wichtig, um beim erstmaligen Starten der Anlage festzustellen, ob die Kartenverteilvorrichtung (2) frei und damit in der Lage ist, eine Karte zu empfangen. Falls vor dem erstmaligen Starten der Anlage eine der Lichtschranken (2E,2F,2G) meldet, daß noch eine Karte in der Kartenverteilvorrichtung (2) vorhanden ist (aus welchen Gründen auch immer), wird der Bediener der Anlage vorzugsweise aufgefordert, diese Karte manuell zu entnehmen. Zum Führen/Lagejustage der Karten auf Kartentransportebene (x,y) beim Empfangen oder Ausgeben weist das Kartenaufnahme-Gehäuse (2B) der Kartenverteilvorrichtung (2) karteneingangs- und ausgangseitig jeweils eine Kartenführungseinrichtung auf. In dem dargestellten Beispiel ist diese von zwei im Abstand übereinander angeordneten Führungsrollen (2H), deren Drehachsen senkrecht zur Bearbeitungs-Ablaufachse (y) verlaufen, gebildet. Der Abstand zwischen den Führungsrollen (2H) ist größer als eine und kleiner als zwei Kartendicken. Damit wird sichergestellt, daß leicht schräg zur Kartentransportebene empfangene oder auszugebende Karten wieder auf die Kartentransportebene (x,y) geführt werden. Kartenausgangsseitig weist das Kartenaufnahme-Gehäuse (2B) einen sich von der Lichtschranke (2F), zwischen den Führungsrollen (2H) nach außen hin offen ertreckenden Schlitz auf, wodurch es möglich ist, daß die Kartenverteilvorrichtung (2) bereits dann verfahren werden kann, wenn eine Karte eigentlich schon an die Chip-und/oder Magnetstreifen-Bearbeitungsstation (3) ausgegeben wurde, aber das hintere Ende der Karte sich noch zwischen den Führunsrollen (2H) befindet. Hierdurch wird unnötige Wartezeit eingespart.

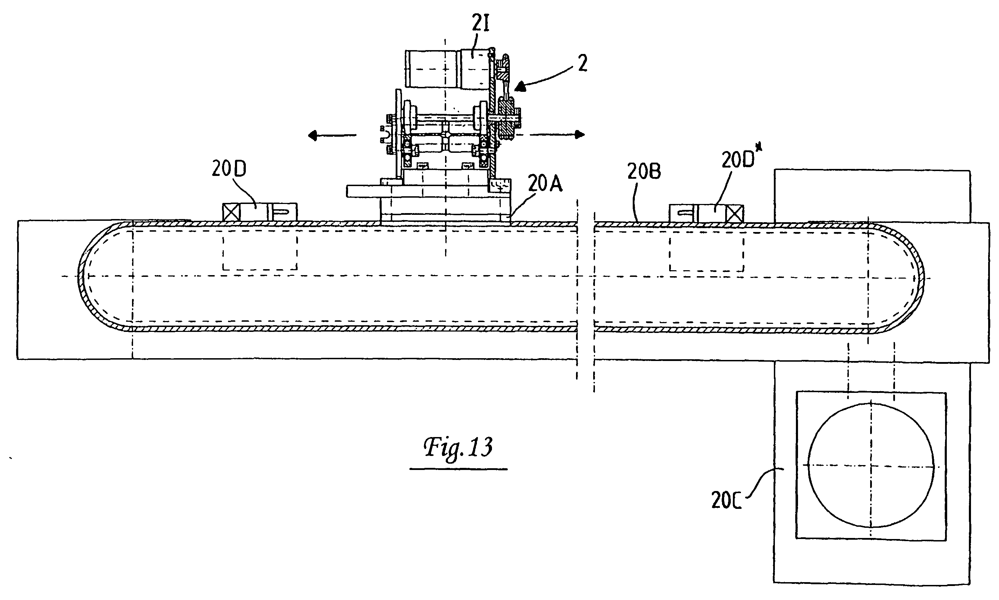

In Fig.13 ist dargestellt, wie die Kartenverteilvorrichtung (2) in dem Ausführungsbeispiel verfahren wird. Dabei wird der Schlitten (2A) der Kartenverteilvorrichtung (2) über eine Montageplatte (20A) unmittelbar auf einem umlaufenden, motorisch antreibbaren Zahnriemen (20B) montiert. Der Zahnriemen (20B) ist zwischen zwei Begrenzungspositionen verfahrbar. Für diesen Zweck sind zwei sich im Abstand der Verfahrstrecke gegenüberliegende Endschalter (20D,20D*) vorgesehen, die von dem Schlitten (2A) beim Erreichen der linken oder rechten Begrenzungsposition betätigt werden, wodurch der Antrieb (20C) für den Zahnriemen (20B) abgeschaltet wird. Zwischen diesen beiden Begrenzungspositionen fährt der Zahnriemen (20B) mit der Kartenverteilvorrichtung (2) jeweils die von der Anlagensteuerung vorbestimmte Kartenempfangs- bzw. Kartenausgabeposition an. Bei der Anlage gemäß dem Ausführungsbeispiel beträgt die max. Verfahrgeschwindigkeit für die Kartenverteilvorrichtung (2) ca. 2,5m/s; die max. Beschleunigung beträgt ca. 10m/s² . Damit ist die Kartenverteilvorrichtung (2) in der Lage, den max. Verfahrweg - von in dieser speziellen Ausführung der Anlage ca. 1m- in ungefähr 1s zurückzulegen. Bei einer Kartentransportgeschwindigkeit von 200-400mm/s durch die Transportrollen (2C) der Kartenverteilvorrichtung (2) ist diese in der Lage, die 85mm langen Karten in einer Zeit < 0,5s an eine Bearbeitungsstation zu übergeben. Durch die Verwendung von unterschiedlich langen Zahnriemen (20B) mit einer entsprechenden Führungschiene kann die maximal mögliche Verfahrstrecke der Kartenverteilvorrichtung (2) flexibel an unterschiedliche Parallelisierungstiefen, sprich die Zahl der mehrfach parallel nebeneinander ausgeführten Bearbeitungsstationen (3,4), die von der Kartenverteilvorrichtung (2) mit Karten bedient werden müssen, angepaßt werden. Darüber hinaus ist es auch vorgesehen, auf dem Zahnriemen zwei Kartenverteilvorrichtungen (nicht dargestellt) zu montieren, wobei eine Aufteilung der Verfahrstrecke vorgenommen wird. Die Kartenverteilvorrichtung (2) inklusive Zahnriemen (20B), Antrieb etc. bilden konstruktiv ein Kartenverteilmodul (M2), das als Komponente der Anlage mit dieser trennbar und austauschbar verbunden ist. Das Kartenverteilmodul (M2) zwischen Kartenvorratsmodul (1) und Chip-und/Magnetstreifen-Bearbeitungsmodul (M3) ist baugleich zu dem Kartenverteilmodul (M2), das zwischen dem Chip-und/Magnetstreifen-Bearbeitungsmodul (M3) und dem Laserbearbeitungs-Modul (M4) angeordnet ist; und - in dem Ausführungsbeispiel - ebenso baugleich zu dem Kartenverteilmodul, das zwischen Laserbearbeitungs-Modul (M4) und dem Bilderkennungs-Modul (M5) angeordnet ist. Das Kartenverteilmodul (2) kann in "Sandwich-Bauweise" in einfacher Weise zwischen zwei Anlage-Module (M1,M3,M4,M5) eingebaut werden.

Nachfolgend sollen noch 3 weitere (nicht dargestellte) Ausführungsformen zur Verfahrbarkeit der Kartenverteilvorrichtung beschreiben werden. In einer ersten alternativen Ausführungsform ist der Schlitten der Kartenverteilvorrichtung auf mindestens einer parallel zur Bearbeituns-Parallelisierungsachse angeordneten Führungsschiene verfahrbar gehalten. Dabei wird der Schlitten mit einem umlaufenden, parallel zur Führunsschiene verlaufenden, motorisch zwischen zwei Begrenzugspositionen transportierbaren Riemen verbunden und ist mit diesem verfahrbar. In der zweiten alternativen Ausführungsform ist der Schlitten der Kartenverteilvorrichtung ebenfalls auf mindestens einer parallel zur Bearbeituns-Parallelisierungsachse angeordneten Führungsschiene verfahrbar gehalten. Dabei wird der Schlitten mit zwei parallel zur Führungsschiene verlaufenden, motorisch antreibbaren Zugsseilen verbunden und von diesen verfahren. In der dritten alternativen Ausführungsform wird der Schlitten der Kartenverteilvorrichtung über eine parallel zur Bearbeituns-Parallelisierungsachse angeordnete, motorisch antreibbare Gewindespindel verfahren.

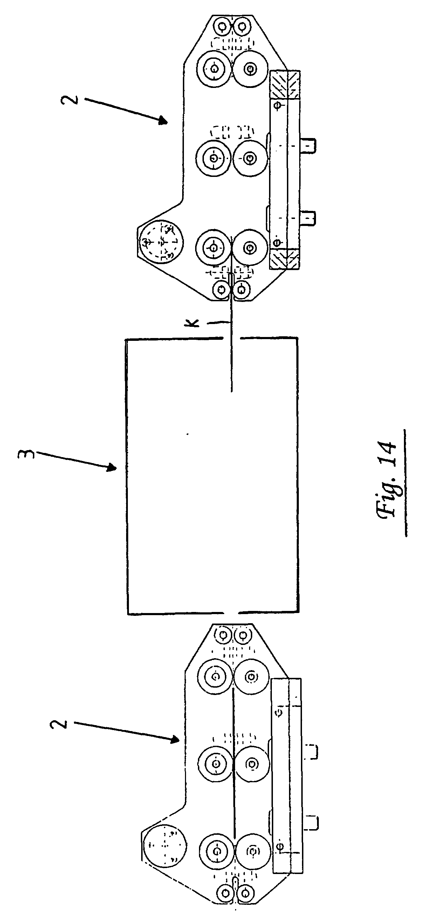

In Fig.14 ist von rechts nach links schematisch die Übergabe einer Karte (K) von der Kartenverteilvorrichtung (2) an eine als Black-Box dargestellte Chip-und/oder Magnetstreifen-Bearbeitungsstation (3) gezeigt. Hinter der Bearbeitungsstation (3) befindet sich ebenfalls eine Kartenverteilvorrichtung (2), in der sich nun die zuvor bearbeitete Karte (K) für den Weitertransport befindet. Die parallel nebeneinander angeordneten Chip-und/oder Magnetstreifen-Bearbeitungsstationen (3) bilden konstruktiv das Chip-und/oder Magnetstreifen-Bearbeitungsmodul (M3). In einer nicht dargestellten Ausführungsform der Anlage ist es vorgesehen, zwei baugleiche Chip-und/oder Magnetstreifen-Bearbeitungs-Module mit jeweils gleicher Anzahl von Stationen (3) in Bearbeitungs-Ablaufrichtung hintereinander ohne Zwischenschaltung eines Kartenverteilmoduls (M2) wieder als Bearbeitungsmodul (M3') zusammengefaßt anzuordnen, um den Kartendurchsatz noch weiter zu erhöhen. Der Kartentransport zwischen hintereinander angeordneten Chip-und/oder Magnetstreifen-Bearbeitungsmodulen erfolgt durch diese selbst. Nach dem Aufzeichnen der Daten in einer dieser Stationen (3) werden die Karten (K) an die sich anschließende Kartenverteilvorrichtung (2) übergeben und weiter an eine freie bzw. an die am schnellsten frei werdende der drei Laserstationen (4) transportiert.

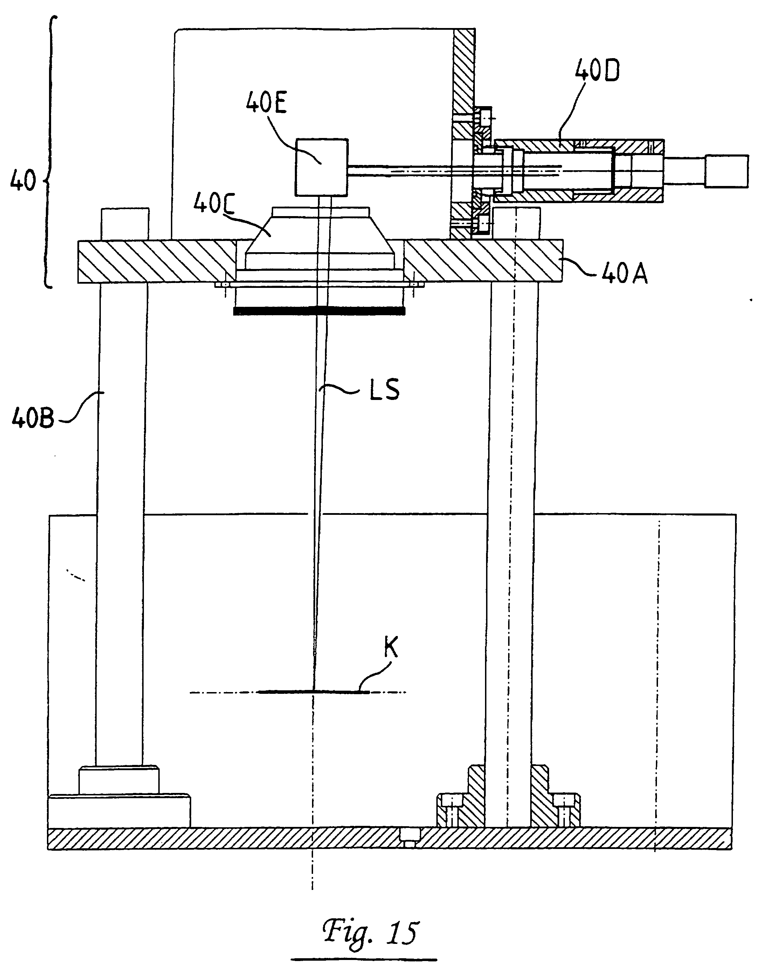

In Fig.15 ist eine Seitenansicht der Laserbeschriftungsstation (4) gezeigt. Die Laserstrahlerzeugung erfolgt in räumlich von der Anlage getrennten Laseranlagen (in dem Ausführungsbeispiel ein Neodym-YAG-Laser, λ = 1,06µm). Die Laserstrahlung wird über eine Glasfiber (nicht dargestellt) dem aus justagegründen gegenüber der Kartentransportebene (x,y) höhenverstellbaren Laserbeschriftungskopf (40) der Laserstation (4) zugeführt. Der Laserbeschriftungskopf (40) ist auf einer auf Halteschienen (40B) höhenverstellbar befestigten Montageplatte (40A) montiert. In der Montageplatte (40A) befindet sich ein Planfeldobjektiv (40C) zur Fokusierung der Laserstrahlung (LS) auf die Karte (K). Die Einkoppelung der Laserstrahlung (LS) über die Glasfiber geschieht durch eine am Kopf (40) angeordnete Einkoppelvorrichtung (40D) mit Einkoppellinse für den divergent aus der Glasfiber austretenden Laserstrahl. Der die Einkoppellinse nahezu parallel verlassende Laserstrahl (LS) trifft zur Kartenbeschriftung über ein Ablenkspiegel-Paar (40E) auf das Planfeldobjektiv (40C) und dann auf die Karte (K).

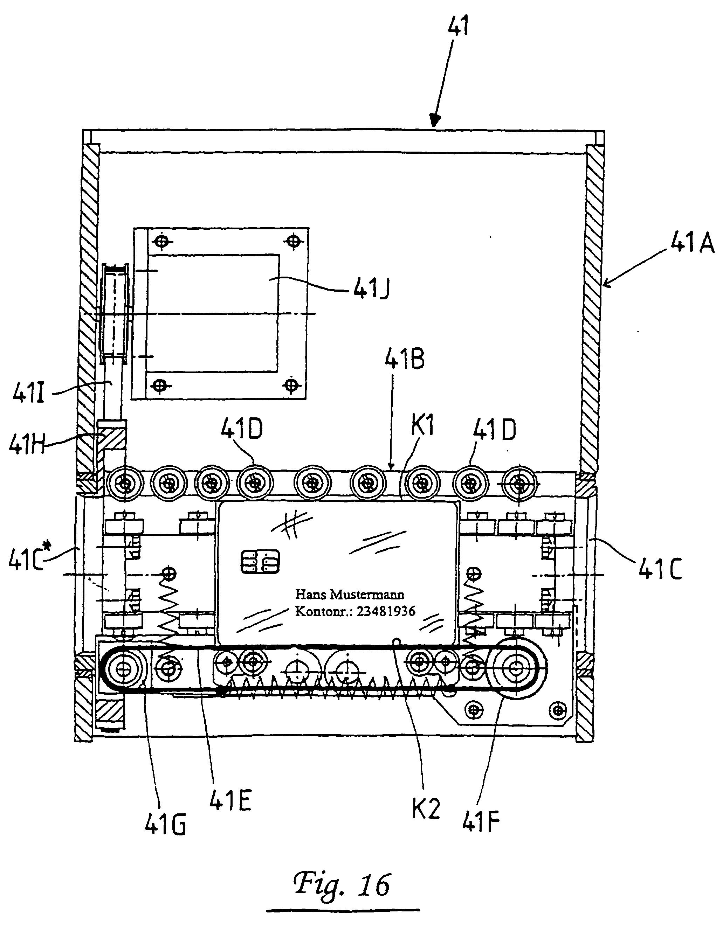

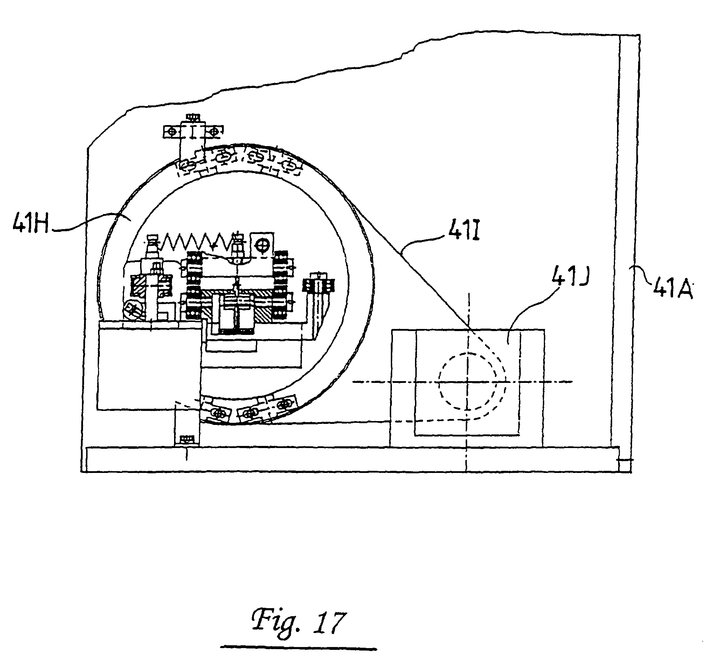

Teil der Laserbeschriftuangsstation (4) ist eine speziell hierfür entwickelte Transport- und Positioniervorrichtung (41) für die Karten (K) - vgl. Fig. 16 und 17. Diese Transport- und Positioniervorrichtung (41) weist einen Montagerahmen (41B) mit einem Einführschlitz (41C) und einem diesem fluchtend gegenüberliegenden Ausgabeschlitz (41C*) auf, wobei in Kartentransportrichtung hinter dem Einführschlitz (41C) eine Eingangszentriereinrichtung und vor dem Ausgabeschlitz (41C*) eine Ausgangszentriereinrichtung jeweils für die Zentrierung der Karten auf die Kartentransportebene (x,y) angeordnet ist. Diese Vorrichtung gestattet, die Positionierung der Karte ohne die Aufsicht auf die Kartenseiten (Vorder- wie auch Rückseite) auch nur teilweise zu verdecken. Damit ist ein vollkommen unverdecktes Beschriftungs- und Sichtfenster gegeben. Dies ist essentiell für eine uneingeschränkte Laserbeschriftung auf der gesamten Kartenfläche. Zwischen dem Einführschlitz (41 C) und dem Ausgabeschlitz (41C*) und parallel zur Kartentransportrichtung ist eine Reihe von nebeneinander am Montagerahmen (41B) drehbar gelagerten Führungsrollen (41D) für die Karten angeordnet, deren Drehachsen senkrecht zur Kartentransportebene (x,y) verlaufen. Den Führungsrollen (41D) beabstandet gegenüberliegend befindet sich ein ca. über die Länge der Führungsrollen-Reihe erstreckender Transportriemen (41E). Dieser Transportriemen (41E) wird zwischen einer motorisch angetriebenen Antriebsrolle (41F) und einer Abtriebsrolle (41G), deren Drehachsen senkrecht zur Kartentransportebene (x,y) verlaufen, gehalten. Dabei werden die Karten (K) zum Transport und zur Positionierung mit ihren Längsseiten (K1,K2) seitlich zwischen den Führungsrollen (41D) und dem Transportriemen (41E) gehalten. Dies ermöglicht es, daß die Kartenseiten vollkommen unverdeckt sind. Die Transport- und Positioniervorrichtung (41) ermöglicht es außerdem, die Karte (K) zu wenden, wodurch ein Beschriften der Rückseite ermöglicht wird - siehe Fig. 17 - . Zu diesem Zweck ist der Montagerahmen (41B) mit dem Einführschlitz (41C) dem Ausgabeschlitz (41C*), der Führungsrollen-Reihe (41D) und dem Transportriemen (41E) in einem Gehäuse (41A) um eine Achse parallel zur Kartentransportrichtung um 180⁰ drehbar gelagert. Dabei ist an dem Montagerahmen (41B) koaxial zur Kartentransportrichtung eine Drehscheibe (41H) montiert, die form-und/oder kraftschlüssig über einen Antriebsriemen (41I) mit einem Antriebsmotor (41J) verbunden ist. Die Transport-und Positioniervorrichtung (41) kann die Karten in der gewendeten und in der nicht gewendeten Stellung von der Kartenverteilvorrichtung (2) empfangen und an die nächste Kartenverteilvorrichtung (2) ausgeben. Die drei Laserbeschriftungsstationen (4) bilden konstruktiv das Laserbearbeitungsmodul (M4), das als Komponente der Anlage mit dieser trennbar und austauschbar verbunden ist.

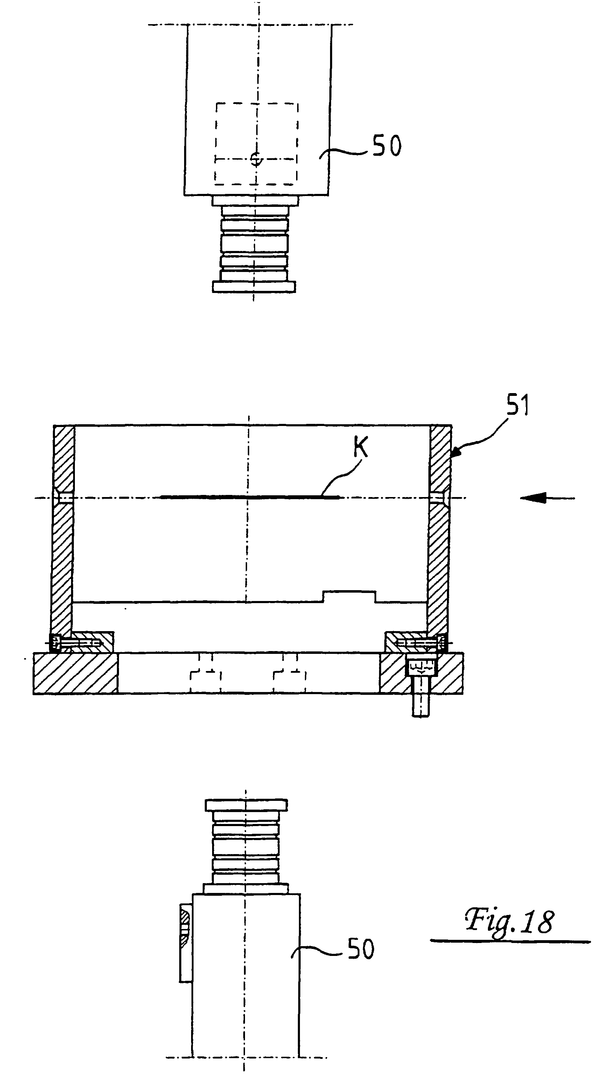

In Fig.18 ist eine in Bearbeitungs-Ablaufrichtung hinter dem Laserbearbeitungsmodul (M4) angeordnete Bilderkennungsstation (5) zur Überprüfung der Richtigkeit und Qualität der auf den Kartenkörper aufgebrachten Daten (Hans Mustermann, Kontonr.: ...) dargestellt. Diese besteht aus zwei von oben und unten auf die Karte (K) blickenden Kameras (50), vorzugsweise CCD-Kameras. Mit diesen Kameras (50) kann die Richtigkeit der auf die Karten aufgelaserten kartenspezifischen Daten durch einen Vergleich des jeweils ausgewerteten Bildes mit dem jeweils zu einer Karte gehörenden Datensatz überprüft werden. Neben der Richtigkeit kann auch die Qualität der Laserbeschriftung (Kontrast, Kantenschärfe etc.) überprüft werden. Karten mit einer falschen oder mangelhaften Laserbeschriftung werden aussortiert. Zum Transport- und zur Positionierung der von den Laserstationen (4) empfangenen Karten weist die Bilderkennungsstation (5) eine Transport-und Positioniervorrichtung (51) auf. Auch hierbei - ebenso wie in der Laserstation - ist es wichtig, daß die von den Kameras (50) zu begutachtenden Karten nicht von Teilen der Transport- und Positioniervorrichtung (51) verdeckt werden. Aus diesem Grunde wird in vorteilhafter Weise für die Transport- und Positioniervorrichtung (51) der Bilderkennungsstation (5) eine zur Transport- und Positioniervorrichtung (41) der Laserstation (4) baugleiche Vorrichtung eingesetzt. Wenn - wie in dem Ausführungsbeispiel - zwei Kameras (50), eine für die Kartenvorderseite und eine für die Kartenrückseite, eingesetzt werden, kann bei der Transport- und Positioniervorrichtung (51) auf die Wendeoption verzichtet werden. Als fehlerhaft erkannte Karten werden in einem Ausschußmagazin (6) abgelegt.

Nach der Bilderkennungsstation (5) werden die Karten in eines der Ablagemagazine (6) abgelegt. In dem Ausführungsbeispiel sind jeweils drei Ablagemagazine (6) konstruktiv als Kartenablagemodul (M6) zusammengefaßt. Welche der Ablagemagazine (6) für die "Gut-Karten" und welche für die "Schlecht-Karten" verwendet werden, kann von dem Bediener der Anlage über die Anlagensteuerung flexibel festgelegt werden.

An diese Stelle soll noch auf einen weiteren Vorteil der erfindungsgemäßen Anlage hingewiesen werden. Bei der Bearbeitung ("Personalisierung") von Karten mit dieser Anlage wird gewährleistet, daß die Reihenfolge der fertigen Katen in dem /den "Gut-Karten"-Ablagemagazinen der Reihenfolge der in die Anlage eingespielten Datensätze (z.B: fortlaufende Kartennummern) entspricht, auch wenn- was aus den verschiedensten Gründen niemals auszuschließen ist - das Aufbringen der Daten in der Chip-und/oder Magnetstreifen-Bearbeitungsstation (3) oder der Laserstation (4) fehlerhaft oder unzureichend war. Das Einhalten der richtigen Kartenreihenfolge ist unbedingt notwendig, wenn nachfolgende, automatisierte Verarbeitungsschritte (z.B. in Versandanlagen für die Karten) dieses voraussetzen. Wie vorstehend bereits erwähnt, wird in den Chip-und/oder Magnetstreifen-Bearbeitungsstationen (3) unmittelbar überprüft, ob die Daten korrekt auf den Chip bzw. auf den Magnetstreifen aufgezeichnet wurden. Ist z.B. wegen eines fehlerhaften Chips oder Magnetstreifens ein Aufzeichnen der Daten auf eine Karte nicht möglich, so werden alsdann nur noch die Datensätze/Karten, die in der Reihenfolge zwischen der zuletzt abgelegten "Gut-Karte" und der "Schlecht-Karte" liegen, abgearbeitet. Aus dem Kartenvorratsmagazin (1) wird eine jungfräuliche Karte entnommen und auf diese der karten-/benutzerspezifische Datensatz der "Schlecht-Karte" aufgebracht. Danach wird wieder die normale Bearbeitung durchgeführt. Dasselbe gilt auch für Fehler bei der Laserbeschriftung, die in der Bilderkennungsstation (5) erkannt werden.

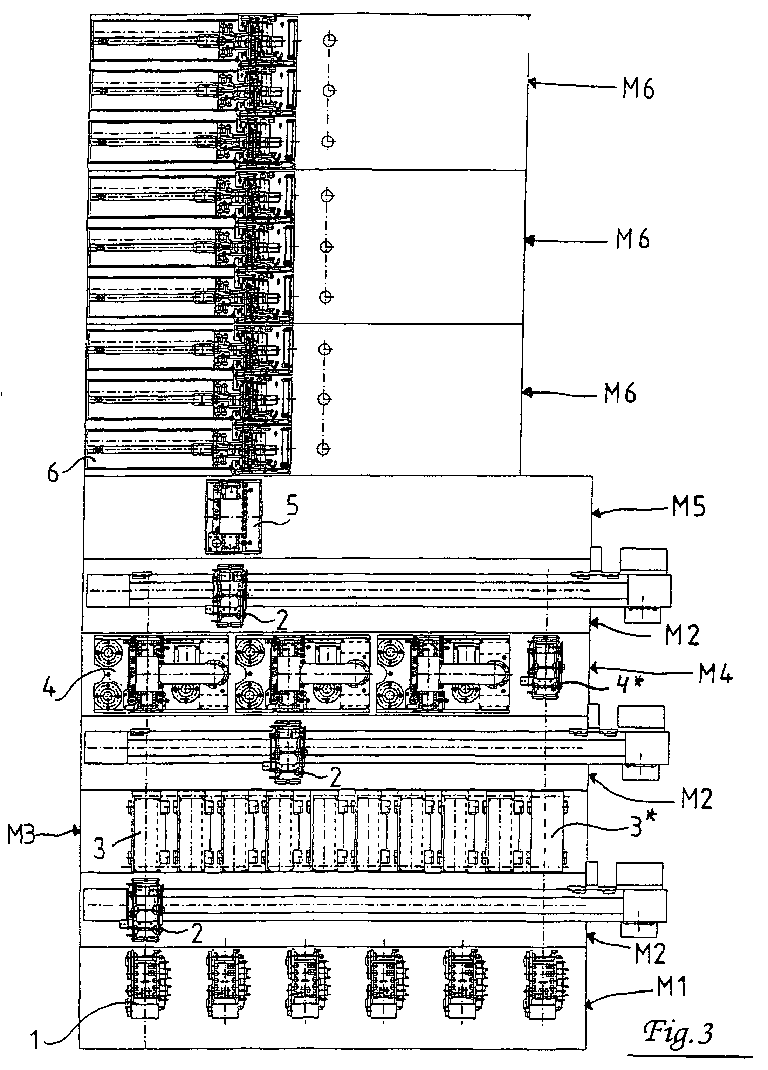

Die "Schlecht-Karten" werden in einem Ausschußmagazin (6) abgelegt. Um in dem Fall von "Schlecht-Karten" die Bearbeitungsstationen (3,4) nicht mit diesen "Schlecht-Karten" zu "verstopfen", ist dem Chip-und/oder Magnetstreifen-Bearbeitungsmodul (M3) und dem Laserbeschriftungsmodul (M4) jeweils eine Park-und/oder Bypass-Station (3*,4*) - vgl. Fig.3- zugeordnet. Wenn z.B. in einer Chip-und/oder Magnetstreifen-Bearbeitungsstation (3) festgestellt wird, daß der Chip einer Karte nicht in Ordnung ist und somit auf diese Karte keine Daten aufgezeichnet werden können, dann muß diese Karte ins Ausschußmagazin (6) befördert werden. Wenn nun alle sich an das Chip-und/oder Magnetstreifen-Bearbeitungsmodul (M3) anschließenden Laserbeschriftungsstationen (4) mit zu beschriftenden Karten besetzt sind, so wird die "Schlecht-Karte" über die Bypass-Station (4*) von den Kartenverteilvorrichtungen (2) an den Laserbeschriftungsstationen (4) vorbei ins Ausschußmagazin (6) befördert- ggfs. wird die "Schlecht-Karte" in der Bypass-Station (4*) zwischengeparkt. Für den Fall, daß die Park-/Bypass-Station (4*) schon mit einer "Schlecht-Karte" blockiert ist, kann die Parkstation (3*) genutzt werden.

Anstelle von Kartenvorratsmodulen (M6) kann die Anlage auch eine Kuvertiermaschiene zur lösbaren Fixierung/Verpackung der bearbeiteten Karten auf/in einem Träger aufweisen; oder aber die Anlage übergibt die fertigen Karten an eine solche Maschine, wobei "Schlecht-Karten" über eine Weiche ausgesondert werden.

Zusätzlich oder anstelle der Laserstation (4) kann die Anlage als Kartenkörper-Bearbeitungsstation eine Hochprägestation (Embossierstation), einen Thermotransferdrucker, einen Thermosublimationsdrucker für Farbdrucke oder einen Tintenstrahldrucker aufweisen. Je nach Bearbeitungszeit dieser Stationen im Verhältnis zu den anderen Bearbeitungsstationen sind diese entlang der Bearbeitungs-Parallelisierungsachse (x) mehrfach ausgeführt.

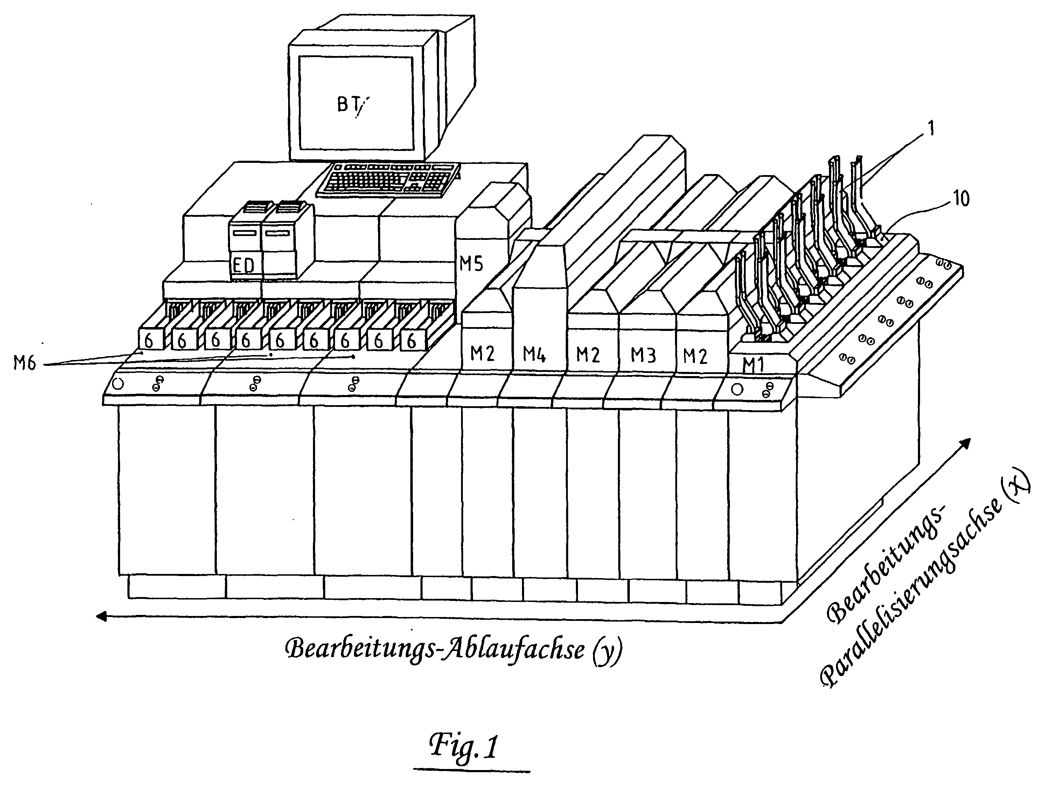

In Fig.1 ist noch das Bedienterminal (BT,Monitor) der Anlagensteuerung für den Operator dargestellt sowie zwei Etiketten-Drucker (ED) zum Drucken von Losnummern-Etiketten, die jeweils auf die Magazine mit den fertig bearbeiteten Karten geklebt werden.

## Patentansprüche

1. Anlage zur Bearbeitung von Chip- und/oder Magnetstreifenkarten (K), bestehend aus
- mindestens einem Kartenvorratsmagazin (1) zur Aufnahme von zu bearbeitenden Karten,
- einer oder mehreren Chip-und/oder Magnetstreifen-Bearbeitungsstationen (3) zum Aufbringen von Daten/Informationen auf den Chip (Halbleiterbaustein) und/oder auf den Magnetstreifen der Karten (K), wobei dieser oder diesen Stationen (3) jeweils eine bestimmte Chip- und/oder Magnetstreifen-Bearbeitungszeit zugeordnet ist,
- einer oder mehreren Kartenkörper-Bearbeitungsstationen (4) zum Aufbringen von nicht änderbaren Daten/Informationen auf den Kartenkörper, wobei diese Stationen (4) gleichen oder unterschiedlichen Bearbeitungstyps sind und dieser oder diesen Stationen (4) jeweils eine bestimmte Kartenkörper-Bearbeitungszeit zugeordnet ist,
- einem Kartentransportsystem, das die Karten von dem Kartenvorratsmagazin (1) hin zur Chip-und/oder Magnetstreifen-Bearbeitungsstation (3) und anschließend hin zu der oder den Kartenkörper-Bearbeitungsstationen (4) und von diesen wieder weiter transportiert,
wobei
- die Bearbeitungsgszeiten von mindestens zwei Bearbeitungsstationen (3,4) unterschiedlich sind, und die Kartentransportzeit von dem Kartenvorratsmagazin (1) zu einer Bearbeitungsstation (3,4) sowie die Kartentransportzeit von einer Bearbeitungsstation (3,4) zur nächsten kleiner ist als die Bearbeitungszeit der Bearbeitungsstation (3) mit der längsten Bearbeitungszeit,
- mindestens die Bearbeitungsstation (3) mit der längsten Bearbeitungszeit mehrfach ausgeführt ist, und die Zahl dieser Bearbeitungsstationen (3) größer ist als die Zahl der Bearbeitungsstationen (4) mit der kürzesten Bearbeitungszeit,
**dadurch gekennzeichnet, daß**
die Anlage eine Kartentransportebene (x,y) mit einer Bearbeitungs-Ablaufachse (y) und einer Bearbeitungs-Parallelisierungs-Achse (x) aufweist, wobei
- Bearbeitungsstationen (3,4) unterschiedlichen Bearbeitungstyps beabstandet hintereinander entlang der Bearbeitungs-Ablaufachse (y) angeordnet sind,
- mehrfach ausgeführte Bearbeitungsstationen (3,4) eines Bearbeitungstyps parallel nebeneinander jeweils entlang der Bearbeitungs-Parallelisierungsachse (x) als Bearbeitungsmodul (M3,M4) angeordnet sind,
- mindestens eine zum Kartentransportsystem gehörende, entlang der Bearbeitungs-Parallelisierungsachse (x) verfahrbare, in Bearbeitungsrichtung vor oder hinter einem Bearbeitungsmodul (M3,M4) , das aus zwei oder mehreren Bearbeitungsstationen (3,4) desselben Bearbeitungstyps besteht, angeordnete Kartenverteilvorrichtung (2) derart angeordnet ist, daß die Karte (K) von der Kartenverteilvorrichtung (2) nach dem Anfahren jeweils einer Kartenempfangs- oder Kartenausgabeposition von einem Kartenvorratsmagazin (1) oder einer Bearbeitungsposition (3,4) empfangen, aufgenommen und an eine Bearbeitungsstation (3, 4) eines nachfolgenden Bearbeitungsmoduls (M3, M4) ausgegeben werden kann.

2. Anlage nach Anspruch 1,
**dadurch gekennzeichnet, daß**
auch die Bearbeitungsstation (4) mit der kürzesten Bearbeitungszeit mehrfach ausgeführt ist.

3. Anlage nach Anspruch 1 oder 2,
**dadurch gekennzeichnet, daß**
die Zahl der Bearbeitungsstationen (3) mit der längsten Bearbeitungszeit im Vergleich zur Zahl der Bearbeitungsstationen (4) mit der kürzesten Bearbeitungszeit dem Verhältnis der Bearbeitungszeiten multipliziert mit der Zahl der Bearbeitungsstationen (4) mit der kürzesten Bearbeitungszeit aufgerundet auf die nächstgrößere ganze Zahl entspricht.

4. Anlage nach einem der vorstehenden Ansprüche,
**dadurch gekennzeichnet, daß**
die Kartenverteilvorrichtung (2) einen entlang der Bearbeitungs-Parallelisierungsachse (x) stufenlos oder schrittweise motorisch verfahrbaren Schlitten (2A) aufweist, auf dem ein Kartenaufnahme-Gehäuse (2B) montiert ist, wobei in dem Kartenaufnahme-Gehäuse (2B) für den Karteneinzug und die Kartenausgabe motorisch antreibbare Transportrollen (2C) auf senkrecht zur Bearbeitungs-Ablaufachse (y) angeordneten Achsen drehbar gelagert sind.

5. Anlage nach Anspruch 4,
**dadurch gekennzeichnet, daß**
in dem Kartenaufnahme-Gehäuse (2B) mindestens 3 Paare von jeweils zwei übereinander angeordneten, zwischen sich jeweils die Karten (K) im Reibkontakt auf Kartentransport-Ebene (x,y) aufnehmenden Transportrollen (2C) vorgesehen sind, wobei jeweils eine Transportrolle (2C) eines Transportrollen-Paares motorisch antreibbar ist.

6. Anlage nach einem der Ansprüche 4 oder 5,
**dadurch gekennzeichnet, daß**
die Antriebsrichtung der Transportrollen (2C) umkehrbar ist.

7. Anlage nach einem der Ansprüche 4 bis 6,
**dadurch gekennzeichnet, daß**
das Kartenaufnahme-Gehäuse (2B) der Kartenverteilvorrichtung (2) mindestens einen Sensor aufweist, der meldet, ob eine eingezogene Karte (K) ordnungsgemäß aufgenommen bzw. ordnungsgemäß ausgegeben wurde, und erst nach einer ordnungsgemäßen Sensormeldung die Kartenverteilvorrichtung (2) entlang der Bearbeitungs-Parallelisierungsachse (x) verfahrbar ist.

8. Anlage nach Anspruch 7,
**dadurch gekennzeichnet, daß**
karteneingangsseitig vor den Transportrollen (2C) und kartenausgangsseitig hinter den Transportrollen (2C) jeweils eine Lichtschranke (2E,2F) vorgesehen ist, wobei
- unmittelbar nach der Detektion einer an die Kartenverteilvorrichtung (2) übergebenen Karte durch die karteneingangsseitige Lichtschranke (2E) der Antrieb (2I) für die Tranportrollen (2C) gestartet wird, und nachdem die Karte (K) diese Lichtschranke (2E) durchlaufen hat, eine Meldung erzeugt wird, die das Verfahren der Kartenverteilvorrichtung (2) entlang der Bearbeitungs-Parallelisierungsachse (x) freischaltet,
- nachdem die Karte (2) die ausgangsseitige Lichtschranke (2F) durchlaufen hat, eine Meldung erzeugt wird, die das Verfahren der Kartenverteilvorrichtung (2) entlang der Bearbeitungs- Parallelisierungsachse (x) freischaltet.

9. Anlage nach Anspruch 8,
**dadurch gekennzeichnet, daß**
die kartenausgangsseitige Lichtschranke (2F) unmittelbar nach Detektion einer empfangenen Karte (K) den Antrieb (2I) für die Transportrollen (2C) ausschaltet, wenn die Kartenverteilvorrichtung (2) die vorgesehene Ausgabeposition noch nicht erreicht hat.

10. Anlage nach einem der Ansprüche 4 bis 9,
**dadurch gekennzeichnet, daß**
das Kartenaufnahme-Gehäuse (2B) karteneingangs- und kartenausgangsseitig jeweils eine Karten-Führungseinrichtung (2H) zum Führen der Karten auf Kartentransportebene aufweist.

11. Anlage nach Anspruch 10,
**dadurch gekennzeichnet, daß**
die Kartenführungseinrichtung von zwei in einem Abstand übereinander angeordneten Führungsrollen (2H), deren Drehachsen parallel zur Bearbeitungs-Parallelisierungsachse (x) verlaufen, gebildet ist, wobei der Abstand zwischen den Führungsrollen (2H) größer als eine und kleiner als zwei Kartendicken ist.

12. Anlage nach einem der Ansprüche 4 bis 11,
**dadurch gekennzeichnet, daß**
der Schlitten (2A) der Kartenverteilvorrichtung (2) über eine Montageplatte (20A) unmittelbar auf einem umlaufenden, motorisch antreibbaren und zwischen zwei Begrenzugspositionen transportierbaren Riemen (20B), vorzugsweise einem Zahnriemen, montiert ist.

13. Anlage nach einem der Ansprüche 4 bis 11,
**dadurch gekennzeichnet, daß**
der Schlitten der Kartenverteilvorrichtung auf mindestens einer parallel zur Bearbeituns-Parallelisierungsachse (x) angeordneten Führungsschiene verfahrbar gehalten ist, wobei der Schlitten mit einem umlaufenden, parallel zur Führungsschiene verlaufenden, motorisch zwischen zwei Begrenzungspositionen transportierbaren Riemen verbunden und mit diesem verfahrbar ist.

14. Anlage nach einem der Ansprüche 4 bis 11,
**dadurch gekennzeichnet, daß**
der Schlitten der Kartenverteilvorrichtung auf mindestens einer parallel zur Bearbeituns-Parallelisierungsachse (x) angeordneten Führungsschiene verfahrbar gehalten ist, wobei der Schlitten mit zwei parallel zur Führungsschiene verlaufenden, motorisch antreibbaren Zugseilen verbunden ist und von diesen verfahrbar ist.

15. Anlage nach einem der vorstehenden Ansprüche 4 bis 11,
**dadurch gekennzeichnet, daß**
der Schlitten der Kartenverteilvorrichtung über eine parallel zur Bearbeitungs-Parallelisierungsachse (x) angeordnete, motorisch antreibbare Gewindespindel verfahrbar ist.

16. Anlage nach einem der vorstehenden Ansprüche,
**dadurch gekennzeichnet, daß**
zwei oder mehrere Kartenvorratsmagazine (1) nebeneinander entlang der Bearbeitungs-Parallelisierungsachse (x) angeordnet sind.

17. Anlage nach einem der vorstehenden Ansprüche,
**dadurch gekennzeichnet, daß**
dieselbe mindestens eine Laserbeschriftungsstation (4) als Kartenkörper-Bearbeitungsstation aufweist.

18. Anlage nach einem der vorstehenden Ansprüche,
**dadurch gekennzeichnet, daß**
dieselbe 3 Laserbeschriftungsstationen (4) und 10 Chip-und/oder Magnetstreifen-Bearbeitungsstationen (3) aufweist.

19. Anlage nach einem der vorstehenden Ansprüche,
**dadurch gekennzeichnet, daß**
dieselbe mindestens eine Hochprägestation (Embossierstation) als Kartenkörper-Bearbeitungsstation aufweist.

20. Anlage nach einem der vorstehenden Ansprüche,
**dadurch gekennzeichnet, daß**
dieselbe mindestens einen Thermotransferdrucker als Kartenkörper-Bearbeitungsstation aufweist.

21. Anlage nach einem der vorstehenden Ansprüche,
**dadurch gekennzeichnet, daß**
dieselbe mindestens einen Thermosublimationsdrucker als Kartenkörper-Bearbeitungsstation aufweist.

22. Anlage nach einem der vorstehenden Ansprüche,
**dadurch gekennzeichnet, daß**
dieselbe mindestens einen Tintenstrahldrucker als Kartenkörper-Bearbeitungsstation aufweist.

23. Anlage nach einem der vorstehenden Ansprüche,
**dadurch gekennzeichnet, daß**
dieselbe in Bearbeituns-Ablaufrichtung hinter der letzten Kartenkörper-Bearbeitungsstation (4) eine Bilderkennungsstation (5) zur Überprüfung der Richtigkeit und Qualität der auf den Kartenkörper aufgebrachten Daten/Informationen aufweist.

24. Anlage nach einem der vorstehenden Ansprüche,
**dadurch gekennzeichnet, daß**
mindestens ein Kartenvorratsmagazin (6), eine Chip-und/oder Magnetstreifen-Bearbeitungsstation (3) und eine Laserstation (4) fluchtend hintereinander angeordnet sind.

25. Anlage nach einem der vorstehenden Ansprüche,
**dadurch gekennzeichnet, daß**
baugleiche Bearbeitungsmodule (M3,M4) eines Bearbeitungstyps mit jeweils gleicher Anzahl von mehrfach ausgeführten Bearbeitungsstationen (3,4) in Bearbeitungs-Ablaufrichtung (y) hintereinander ohne Zwischenschaltung eines Kartenverteilmoduls (M2) wiederum als Bearbeitungsmodul (M3',M4') zusammengefaßt sind.

26. Anlage nach einem der vorstehenden Ansprüche,
**dadurch gekennzeichnet, daß**
jedes Bearbeitungsmodul (M3,M4) eine Park-und/oder Bypass-Station (3*,4*) für Karten aufweist.

27. Anlage nach einem der vorstehenden Ansprüche,
**dadurch gekennzeichnet, daß**
dieselbe Kartenablage- und Kartenausschußmagazine (6) zur Aufnahme der bearbeiteten Karten aufweist.

28. Anlage nach einem der Ansprüche 1 bis 26,
**dadurch gekennzeichnet, daß**
dieselbe eine Kuvertiermaschine zur lösbaren Fixierung/Verpackung der bearbeiteten Karten auf/in einem Träger aufweist.

## Claims

1. System for processing chip and/or magnetic stripe cards (K), comprising
- at least one card supply magazine (1) for accommodating cards to be processed,
- one or more chip and/or magnetic stripe processing stations (3) for applying data/information to the chip (semiconductor module) and/or to the magnetic stripe of the cards (K), with a particular chip and/or magnetic stripe processing time being associated with said station(s) (3) in each case,
- one or more card body processing stations (4) for applying non-alterable data/information to the card body, said stations (4) being of the same or different processing types, and a particular card body processing time being associated with said station(s) (4) in each case,
- a card transport system which transports the cards from the card supply magazine (1) to the chip and/or magnetic stripe processing station (3) and subsequently to the card body processing station(s) (4), and from the latter onwards,
wherein
- the processing times of at least two processing stations (3, 4) are different, and the card transport time from the card supply magazine (1) to a processing station (3, 4) as well as the card transport time from one processing station (3, 4) to the next is shorter than the processing time of the processing station (3) with the longest processing time,
- there is a plurality of at least the processing station (3) having the longest processing time, and the number of said processing stations (3) is greater than the number of processing stations (4) with the shortest processing time,
**characterized in that**
the system has a card transport plane (x, y) with a processing sequence axis (y) and a processing parallelization axis (x), wherein
- processing stations (3, 4) of different processing types are arranged in a spaced relationship one behind the other along the processing sequence axis (y),
- a plurality of processing stations (3, 4) of one processing type are arranged next to one another in parallel in each case along the processing parallelization axis (x) as processing module (M3, M4),
- at least one card distribution device (2) belonging to the card transport system, which device can be moved along the processing parallelization axis (x) and is arranged in the processing direction before or after a processing module (M3, M4) comprising two or more processing stations (3, 4) of the same processing type, is arranged in such a way that, after moving into a card receipt or a card discharge position respectively, the card (K) can be received from a card supply magazine (1) or a processing position (3, 4), taken up, and discharged by the card distribution device (2) to a processing station (3, 4) of a subsequent processing module (M3, M4).

2. System according to Claim 1,
**characterized in that**
there is also a plurality of the processing station (4) with the shortest processing time.

3. System according to Claim 1 or 2,
**characterized in that**
the number of processing stations (3) with the longest processing time compared to the number of processing stations (4) with the shortest processing time corresponds to the ratio of the processing times multiplied by the number of processing stations (4) with the shortest processing time rounded to the next higher integer.

4. System according to one of the preceding claims,
**characterized in that**
the card distribution device (2) has a carriage (2A) which can be motor-driven along the processing parallelization axis (x) in either a continuous or stepwise manner, on which carriage a card receiving housing (2B) is mounted, with motor-driven transport rollers (2C) for the card feed and the card discharge being pivoted on axes arranged perpendicularly to the processing sequence axis (y) in said card receiving housing (2B).

5. System according to Claim 4,
**characterized in that**
at least 3 pairs of transport rollers (2C) are provided in the card receiving housing (2B), each pair comprising two transport rollers arranged one above the other which in each case take up between them the cards (K) in frictional engagement on the card transport plane (x, y),
wherein one transport roller (2C) of a transport roller pair can be motor-driven in each case.

6. System according to one of Claims 4 or 5,
**characterized in that**
the drive direction of the transport rollers (2C) is reversible.

7. System according to one of Claims 4 to 6,
**characterized in that**
the card receiving housing (2B) of the card distribution device (2) has at least one sensor which signals whether a fed-in card (K) has been properly taken up or properly discharged respectively, and the card distribution device (2) can be moved along the processing parallelization axis (x) only after a correct signal from said sensor.

8. System according to Claim 7,
**characterized in that**
a light barrier (2E, 2F) is provided in each case on the card leading edge side upstream of the transport rollers (2C) and on the card trailing edge side downstream of the transport rollers (2C), wherein
- the light barrier (2E) on the card leading edge side starts the drive (2I) of the transport rollers (2C) immediately after detection of a card transferred to the card distribution device (2) and, after the card (K) has passed said light barrier (2E), a signal is generated which enables the traversal of the card distribution device (2) along the processing parallelization axis (x),
- a signal is generated once the card (K) has passed the light barrier (2F) on the card trailing edge side, which signal enables the traversal of the card distribution device (2) along the processing parallelization axis (x).

9. System according to Claim 8,
**characterized in that**
the light barrier (2F) on the card trailing edge side turns off the drive (21) of the transport rollers (2C) immediately after detection of a received card (K) if the card distribution device (2) has not yet reached the intended discharge position.

10. System according to one of Claims 4 to 9,
**characterized in that**
the card receiving housing (2B) is provided in each case on the card leading edge side and card trailing edge side with a card guiding means (2H) for guiding the cards on the card transport plane.

11. System according to Claim 10,
**characterized in that**
the card guide means is formed by two guide rollers (2H) which are arranged one above the other at a distance from each other, the rotation axes of which rollers extend parallel to the processing parallelization axis (x), wherein the distance between the guide rollers (2H) is greater than one and less than two card thicknesses.

12. System according to one of Claims 4 to 11,
**characterized in that**
the carriage (2A) of the card distribution device (2) is mounted by means of a mounting plate (20A) directly on a circulating motor-driven belt (20B), preferably a toothed belt, which can be moved between two limit positions.

13. System according to one of Claims 4 to 11,
**characterized in that**
the carriage of the card distribution device is movably installed on at least one guide rail arranged in parallel to the processing parallelization axis (x), said carriage being connected to and movable by a circulating belt which extends parallel to the guide rail and can be motor-driven between two limit positions.

14. System according to one of Claims 4 to 11,
**characterized in that**
the carriage of the card distribution device is movably installed on at least one guide rail arranged in parallel to the processing parallelization axis (x), said carriage being connected to and being movable by two motor-driven traction cables which extend parallel to the guide rail.

15. System according to one of the preceding Claims 4 to 11,
**characterized in that**
the carriage of the card distribution device can be moved by means of a motor-driven threaded spindle arranged parallel to the processing parallelization axis (x).

16. System according to one of the preceding claims,
**characterized in that**
two or more card supply magazines (1) are arranged next to one other along the processing parallelization axis (x).

17. System according to one of the preceding claims,
**characterized in that** said system has at least one laser inscription station (4) as card body processing station.

18. System according to one of the preceding claims,
**characterized in that**
said system has 3 laser inscription stations (4) and 10 chip and/or magnetic stripe processing stations (3).

19. System according to one of the preceding claims,
**characterized in that**
said system has at least one embossing station (4) as card body processing station.

20. System according to one of the preceding claims,
**characterized in that** said system has at least one thermal transfer printer as card body processing station.

21. System according to one of the preceding claims,
**characterized in that** said system has at least one thermal sublimation printer as card body processing station.

22. System according to one of the preceding claims,
**characterized in that**
said system has at least one inkjet printer as card body processing station.

23. System according to one of the preceding claims,
**characterized in that**
said system has an image recognition station (5) arranged following the last card body processing station (4) in the processing sequence direction for verifying the correctness and quality of the data/information applied to the card body.

24. System according to one of the preceding claims,
**characterized in that**
at least one card supply magazine (6), one chip and/or magnetic stripe processing station (3) and one laser station (4) are arranged one behind the other in alignment with each other.

25. System according to one of the preceding claims,
**characterized in that**
identically designed processing modules (M3, M4) of one processing type, each having the same number of a plurality of processing stations (3, 4) arranged one behind the other in the processing sequence direction (y) without the interposition of a card distribution module (M2), are in turn combined into a processing module (M3', M4').

26. System according to one of the preceding claims,
**characterized in that**
each processing module (M3, M4) has a parking and/or bypass station (3*, 4*) for cards.

27. System according to one of the preceding claims,
**characterized in that**
said system has card storage and card reject magazines (6) for accommodating the processed cards.

28. System according to one of Claims 1 to 26,
**characterized in that**
said system has an enveloping machine for the detachable fixing/packaging of the processed cards on/in a carrier.

## Revendications

1. Installation pour le traitement de cartes à puces et / ou à pistes magnétiques (K) comprenant
- au moins un magasin de stockage de cartes (1) pour les cartes à traiter,
- un ou plusieurs postes de traitement de puces ou de pistes magnétiques (3) pour pourvoir de données / d'informations les puces (modules à semi-conducteurs) et / ou les pistes magnétiques desdites cartes (K), un temps déterminé de traitement de puce et / ou de piste magnétique étant associé à chacune d'elles ou à chacun de ces postes (3),
- un ou plusieurs postes de traitement de corps de cartes (4) pour pourvoir lesdits corps de cartes de données / d'informations non modifiables, lesdits postes (4) appartenant au même type de traitement ou à des types différents et un temps déterminé de traitement de corps de cartes étant associé à ce poste ou à chacun de ces postes (4),
- un système de transport de cartes, qui transporte les cartes du magasin de stockage de cartes (1) au poste de traitement de puces et / ou de pistes magnétiques (3), puis au ou aux postes de traitement de corps de cartes (4) et de ainsi de suite à partir de ceux-ci,
- les temps de traitement d'au moins deux postes de traitement (3,4) différant l'un de l'autre et le temps de transport des cartes du magasin de stockage de cartes (1) à un poste de traitement (3,4) ainsi que le temps de transport des cartes d'un poste de traitement (3,4) au suivant étant inférieur au temps de traitement du poste de traitement (3) auquel est associé le temps de traitement le plus long,
- au moins le poste de traitement (3), dont le temps de traitement est le plus long, étant réalisé plusieurs fois et le nombre de ces postes de traitement (3) étant supérieur au nombre des postes de traitement (4) aux temps de traitement les plus courts,
**caractérisée en ce que**
l'installation présente un plan de transport de cartes (x, y) avec un axe d'évolution du traitement (y) et un axe de traitement en parallèle (x),
- des postes de traitement (3,4) de types de traitement différents étant disposés, à distance, les uns derrière les autres, le long de l'axe d'évolution du traitement (y),
- des postes de traitement (3,4) d'un seule type de traitement, réalisés plusieurs fois, étant disposés parallèlement, les uns à côté des autres, le long de l'axe de traitement en parallèle (x), sous la forme de modules de traitement (M3,M4),
- au moins un dispositif de distributions de cartes (2), associé au système de transport de cartes et mobile le long de l'axe de traitement en parallèle (x), dans le sens de traitement, en amont ou en aval d'un module de traitement (M3,M4) composé de deux ou de plusieurs postes de traitement (3,4) du même type, étant disposé de sorte qu'après l'arrivée à un poste de réception ou de délivrance de cartes, la carte (K) est accueillie par un magasin de stockage de cartes (1) ou un poste de traitement (3, 4) et délivrée à une station de traitement (3, 4) d'un module de traitement (M3, M4) suivant.

2. Installation selon la revendication 1,
**caractérisée en ce que**
le poste de traitement (4) dont le temps de traitement est le plus court est également réalisé plusieurs fois.

3. Installation selon la revendication 1 ou 2,
le nombre des postes de traitement (3) à temps de traitement le plus long en comparaison avec le nombre des postes de traitement (4) à temps de traitement le plus court, correspond au rapport des temps de traitement multiplié par le nombre des postes de traitement (4) à temps de traitement le plus court, arrondi au nombre supérieur, suivant.

4. Installation selon l'une des revendications précédentes,
**caractérisée en ce que**
le dispositif de distribution de cartes (2) présente un chariot (2A) commandé par moteur, en continu ou pas à pas, le long de l'axe de traitement en parallèle (x), sur lequel est monté un boîtier de réception des cartes (2B), dans lequel, pour l'introduction et la sortie des cartes, des galets de transport (2C), à commande motorisée, sont montés en rotation sur des axes disposés perpendiculairement par rapport à l'axe d'évolution du traitement (y).

5. Installation selon la revendication 4,
**caractérisée en ce que**,
dans le boîtier de réception de cartes (2B), au moins 3 paires de galets de transport (2C), superposés deux par deux, qui accueillent respectivement entre eux les cartes (K) en contact friction sur le plan du transport de cartes (x, y), un galet de transport (2C) de chaque paire de pouvant être entraîné par moteur.

6. Installation selon l'une des revendications 4 ou 5,
**caractérisée en ce que**
le dispositif d'entraînement des galets de transport (2C) est réversible.

7. Installation selon l'une des revendications 4 à 6,
**caractérisée en ce que**
le boîtier de réception des cartes (2B) du dispositif de distribution des cartes (2) présente au moins un capteur qui indique qu'une carte insérée (K) a été correctement introduite ou sortie, et que ledit dispositif de distribution des cartes (2) ne peut être déplacé le long de l'axe de traitement en parallèle (x) qu'après que le capteur ait délivré un message conforme.

8. Installation selon la revendication 7,
**caractérisée en ce que**,
du côté d'entrée de cartes, en amont des galets de transport (2C) et du côté de sortie de cartes, en aval des galets de transport (2C), une barrière lumineuse (2E,2F) est respectivement prévue,
- immédiatement après la détection d'une carte remise au dispositif de distribution de cartes (2), l'entraînement (21) des galets de transport (2C) étant démarré par la barrière lumineuse (2E). côté entrée des cartes, et, après le passage de la carte (K) par cette barrière lumineuse (2E), un message étant généré, lequel libère la course du dispositif de distribution de cartes (2), le long de l'axe de traitement en parallèle (x),
- après passage de la carte (K) par la barrière lumineuse (2F), côté sortie, un message étant généré, lequel libère la course du dispositif de distribution de cartes (2), le long de l'axe de traitement en parallèle (x).

9. Installation selon la revendication 8,
**caractérisée en ce que**
la barrière lumineuse (2F), côté sortie des cartes, met hors de circuit l'entraînement (21) des galets de transport (2C), immédiatement après la détection d'une carte reçue (K) si le dispositif de distribution de cartes (2) n'a pas encore atteint la position de sortie prévue.

10. Installation selon l'une des revendications 4 à 9,
**caractérisée en ce que**
le boîtier de réception de cartes (2B), côté entrée et côté sortie des cartes, présente respectivement un dispositif de guidage de cartes (2H) pour la conduite des cartes sur le plan de transport desdites cartes.

11. Installation selon la revendication 10,
**caractérisée en ce que**
le dispositif de guidage de cartes est composé de deux galets de guidage (2H), disposés, à distance, l'un au-dessus de l'autre et dont les axes de rotation sont orientés parallèlement à l'axe de traitement en parallèle (x), la distance entre lesdits galets de guidage (2H) étant supérieure à une épaisseur et inférieure à deux épaisseurs de carte.

12. Installation selon l'une des revendications 4 à 11,
**caractérisée en ce que**
le chariot (2A) du dispositif de distribution de cartes (2) est monté, à l'aide d'une plaque de montage (20A), directement sur une courroie (20B) rotative, entraînée par moteur et mobile entre deux positions limites, ladite courroie étant préférentiellement une courroie dentée.

13. Installation selon l'une des revendications 4 à 11,
**caractérisée en ce que**
le chariot du dispositif de distribution des cartes est maintenu mobile sur au moins un rail de guidage, qui est disposé parallèlement à l'axe de traitement en parallèle (x), ledit chariot étant relié à une courroie rotative, orientée parallèlement audit rail de guidage et mue par moteur entre deux positions limites, et pouvant être déplacé avec celle-ci.

14. Installation selon l'une des revendications 4 à 11,
**caractérisée en ce que**
le chariot du dispositif de distribution des cartes est maintenu mobile sur au moins rail de guidage qui est disposé parallèlement à l'axe de traitement en parallèle (x), ledit chariot étant relié à deux câbles tracteurs, orientés parallèlement audit rail de guidage et mus par moteur, et pouvant être déplacé par ceux-ci.

15. Installation selon l'une des revendications précédentes 4 à 11,
**caractérisée en ce que**
le chariot du dispositif de distribution de cartes peut être mû par l'intermédiaire d'une tige filetée, orientée parallèlement par rapport à l'axe de traitement en parallèle (x) et pouvant être entraînée par moteur.

16. Installation selon l'une des revendications précédentes,
**caractérisée en ce que**
deux ou plusieurs magasins de stockage de cartes (1) sont disposés les uns à côtés des autres, le long de l'axe de traitement en parallèle (x).

17. Installation selon l'une des revendications précédentes,
**caractérisée en ce que**
celle-ci présente au moins un poste d'inscription laser (4) comme poste de traitement de corps de cartes.

18. Installation selon l'une des revendications précédentes,
**caractérisée en ce que**
celle-ci présente 3 postes d'inscription laser (4) et 10 postes de traitement de puces et / ou de pistes magnétiques (3).

19. Installation selon l'une des revendications précédentes,
**caractérisée en ce que**
celle-ci présente au moins un poste d'estampage profond (poste d'impression en relief) comme poste de traitement de corps de cartes.

20. Installation selon l'une des revendications précédentes,
**caractérisée en ce que**
celle-ci présente au moins une imprimante à transfert thermique comme poste de traitement de corps de cartes.

21. Installation selon l'une des revendications précédentes,
**caractérisée en ce que**
celle-ci présente au moins une imprimante à sublimation thermique comme poste de traitement de corps de cartes.

22. Installation selon l'une des revendications précédentes,
**caractérisée en ce que**
celle-ci présente au moins une imprimante à jet d'encre comme poste de traitement de corps de cartes.

23. Installation selon l'une des revendications précédentes,
**caractérisée en ce que**
celle-ci présente, dans le sens d'évolution du traitement, en val du dernier poste de traitement de corps de cartes (4), un poste d'analyse d'images (5) pour le contrôle de l'exactitude et de la qualité des données / informations appliquées sur les corps de cartes.

24. Installation selon l'une des revendications précédentes,
**caractérisée en ce qu'**
au moins un magasin de stockage de cartes (6), un poste de traitement de puces et / ou de pistes magnétiques (3) et un poste laser (4) sont disposés, en alignement, l'un derrière l'autre.

25. Installation selon l'une des revendications précédentes,
**caractérisée en ce que**
des modules de traitement (M3,M4) de même construction et de même type de traitement, présentant chacun le même nombre de stations de traitement (3, 4) réalisées plusieurs fois, sont groupés, les uns derrière les autres, dans le sens d'évolution du traitement (y), sans l'intermédiaire d'un module de distribution de cartes (M2), (y), en tant que module de traitement (M3', M4').

26. Installation selon l'une des revendications précédentes,
**caractérisée en ce que**
chaque module de traitement (M3,M4) présente un poste parking et / ou bypass (3*,4*) pour cartes.

27. Installation selon l'une des revendications précédentes,
**caractérisée en ce que**
celle-ci présente un magasin de dépôt et de rebus de cartes (6) recevant les cartes traitées.

28. Installation selon l'une des revendications 1 à 26,
**caractérisée en ce que**
celle-ci présente une machine de mise sous enveloppe pour la fixation amovible / l'emballage des cartes traitées, sur / dans un support.
